# EUROPÄISCHE PATENTSCHRIFT

(11) **EP 2 088 305 B1**
(45) Veröffentlichungstag und Bekanntmachung des Hinweises auf die Patenterteilung: **05.09.2018**
(21) Anmeldenummer: 08002192.6
(22) Anmeldetag: 06.02.2008
(51) Int. Cl.: F02F 11/00, F16J 15/08

(54) **Metallische Flachdichtung**
Flat metal gasket
Joint plat métallique

(43) Veröffentlichungstag der Anmeldung: 12.08.2009
(73) Patentinhaber: REINZ-Dichtungs-GmbH, 89233 Neu-Ulm (DE)
(72) Erfinder: Egloff, Georg, 89264 Weissenhorn (DE); Hoehe, Kurt, 89129 Langenau (DE); Schneider, Juergen, Dr., 89188 Merklingen (DE)
(74) Vertreter: Tomerius, Isabel

(56) Entgegenhaltungen:
- EP-A- 0 358 855
- DE-A1-102005 003 017
- GB-A- 2 097 871
- US-A- 4 203 608

## Beschreibung

Die Erfindung betrifft eine metallische Flachdichtung, insbesondere eine metallische Flachdichtung, die im Bereich von Verbrennungsmotoren von Kraftfahrzeugen eingesetzt werden kann, bevorzugt eine Zylinderkopfdichtung, eine Dichtung zur Abdichtung von hohen Drücken oder eine Dichtung im Bereich des Abgasstrangs einschließlich der Abgasaufbereitung und Abgasnachbehandlung, wie z.B. eine Abgaskrümmerdichtung. Zur Abdichtung der Brenngasöffnungen werden in derartigen Dichtungen üblicherweise Sicken verwendet, welche in die Dichtungslagen eingeformt sind und die Brenngasöffnungen vollständig umgeben. Um zu verhindern, dass die Sicke im Betrieb der Dichtung zu stark belastet wird und ihre Elastizität verliert, wird der Sicke häufig ein so genannter Stopper zugeordnet, der schwerer komprimierbar ist als die Sicke und deren vollständiges Abplatten im Betrieb verhindern soll. Häufig ist der Stopper zwischen der Sicke und der Brenngasöffnung angeordnet, da er dabei in vielen Fällen gleichzeitig auch das Vordringen heißer Brenngase in Richtung auf die Sicke verhindert. Wegen der Anordnung von Sicke und Stopper nebeneinander benötigt die beschriebene Ausgestaltung der Dichtungen jedoch relativ viel Platz. Dieser steht jedoch nicht in allen Anwendungsfällen zur Verfügung. Bei Motorblöcken mit Zylinderlaufbuchsen erfordert eine optimal ausgelegte Zylinderkopfdichtung eine individuell auf den Motortyp abgestimmte Platzierung von Stopper und Sicke als inelastischem und elastischem Element, dies ist jedoch meist nicht möglich, da die Elemente zur Aufrechterhaltung ihrer Funktion einen Mindestabstand voneinander einnehmen müssen und wie schon erwähnt für sich genommen einen Mindestplatzbedarf haben.

Ein weiterer Nachteil der beschriebenen Sicken-Stopper-Anordnung besteht weiterhin darin, dass der Stopper in der Regel als gesondertes Element gefertigt werden muss. Häufig besteht ein Stopper beispielsweise in einer ringförmigen metallischen Auflage, welche auf die mit der Sicke versehene metallische Dichtungslage aufgesetzt und an dieser befestigt werden muss. Zusätzlich zu dem erhöhten Materialverbrauch bedeutet dies außerdem einen erhöhten Fertigungsaufwand. Aus der EP 0 358 855 A2 ist ferner bereits eine metallische Flachdichtung mit einer Kombinationssicke mit einem schmalen, hohen ersten Bereich und einem dazu abgesetzt angeordneten breiten, flachen Bereich bekannt. Diese Kombinationssicke soll sich durch eine hohe Abdichtwirkung und gleichzeitig durch eine hohe Rückverformungskraft auszeichnen.

**Aufgabe** der Erfindung ist es entsprechend, eine metallische Flachdichtung anzugeben, bei welcher eine in eine metallische Dichtungslage eingeformte Wölbung, zum Beispiel in Form einer Sicke oder Halbsicke, besonders zuverlässig und ohne ein Stopperelement vor dem vollständigen Abflachen im Betrieb bewahrt werden kann. Dieses Konzept sollte sich bereits in einlagigen metallischen Flachdichtungen verwirklichen lassen.

Die Lösung dieser Aufgabe gelingt mit der metallischen Flachdichtung gemäß Anspruch 1 und der Verwendung der metallischen Flachdichtung gemäß Anspruch 17. Bevorzugte Ausgestaltungen der Flachdichtung sind in den Unteransprüchen beschrieben.

In einem ersten Aspekt betrifft die Erfindung demnach eine metallische Flachdichtung mit wenigstens einer metallischen Dichtungslage, die überwiegend plan ausgebildet ist und eine erste und eine zweite Oberfläche aufweist. Die Dichtungsebene ist dabei so definiert, dass sie in der Ebene der Ränder der größten Durchgangsöffnungen liegt. Dies bedeutet, dass die Bereiche der Dichtung, die unmittelbar diese Öffnungen, insbesondere die Brennraum- bzw. Brenngasdurchgangsöffnungen umgeben, die Dichtungsebene aufspannen. Bei einigen Anwendungen, beispielsweise bei Hochdruckdichtungen kann die größte Durchgangsöffnung durchaus eine andere als die vom erfindungsgemäßen Dichtelement umgebene sein. Die Planarität bezieht sich auf einen Zustand der Dichtung, in welchem diese nicht zwischen den abzudichtenden Gegenflächen eingebaut ist, also den unbelasteten Zustand der Dichtung. Geringfügige fertigungstechnisch bedingte Abweichungen aus der Planarität, beispielsweise Verwerfungen innerhalb der Dichtungsebene, gelten nicht als Abweichung aus der Planarität.
In diese Dichtungslage ist eine Wölbung eingeformt, die über die erste Oberfläche der Dichtungslage vorsteht und eine größere Länge als Breite aufweist. Die Wölbung ist dabei so ausgebildet, dass sie ein erstes Niveau aufweist, das die Form einer virtuellen Ebene besitzt, die parallel zur Dichtungsebene der Dichtungslage durch den Fuß der Wölbung auf der ersten Oberfläche der Dichtungslage verläuft. Die Dichtungsebene der Dichtungslage ist so definiert, dass sie mittig zwischen den planen Oberflächenbereichen der Dichtungslage verläuft. Bei dem ersten Niveau handelt es sich also um eine zu dieser Mittelebene parallele virtuelle Ebene, die auf der Seite der ersten Oberfläche der Dichtungslage - also derjenigen Oberfläche, über die die Wölbung vorsteht - liegt und dabei durch den Fuß der Wölbung hindurchgeht. Der Fuß der Wölbung ist dabei derjenige Bereich unmittelbar neben der Wölbung, in dem die Wölbung gerade noch nicht über die erste Dichtungslage ansteigt, sondern noch eine Steigung von Null aufweist.
Die Wölbung wird weiterhin durch ein zweites Niveau definiert, das als weitere virtuelle Ebene ebenfalls parallel zur Dichtungsebene der Dichtungslage verläuft und dabei den höchsten Punkt der Wölbung umfasst. Erstes und zweites Niveau begrenzen also in Form virtueller Ebenen den höchsten und den niedrigsten Punkt der Wölbung. Zwischen diesen beiden Niveaus besitzt die Wölbung einen ansteigenden Flankenbereich. Dieser Flankenbereich ist erfindungsgemäß derart ausgestaltet, dass er eine Wellenstruktur aufweist. Diese besteht aus wenigstens zwei Wellen mit je einem Wellenberg und einem Wellental, die zwischen den beiden Niveaus verlaufen. Im Flankenbereich sind also wenigstens zwei Auslenkungen in Richtung auf das erste Niveau hin vorhanden und mit diesen abwechselnd mindestens ebenfalls zwei Auslenkungen in Richtung auf das andere, zweite Niveau. Von jeder der beiden Oberflächen der Dichtungslage her betrachtet, sind also je zwei Wellenberge und zwei Wellentäler pro Flankenbereich erkennbar. Fußpunkte und Scheitelpunkt oder Scheitelplateau zählen also bei der Ermittlung der Anzahl der Wellenberge und Wellentäler üblicherweise nicht mit. Die einzige Ausnahme hiervon bilden Dichtungen, bei denen die Wölbung auf ihrer konvexen Seite genau zwei Scheitelpunkte aufweist, zwischen denen genau ein Wellental - ein Wellental, kein breites Plateau - liegt. Hier und nur hier zählen sowohl der Scheitelpunkt als auch das mittige Wellental zur Anzahl Wellenberge und Wellentäler hinzu, d.h. das mittige Wellental wird bei der Zählung für beide Flankenbereiche berücksichtigt.

Die Wölbung und die in ihr vorgesehene Wellenstruktur werden bevorzugt durch Prägen der Dichtungslage hergestellt. Dabei können beide Strukturen im selben Prägeschritt erzeugt werden. Werden zum Prägen Prägeformen verwendet, welche komplementär ineinander greifen und, bei Schließung ohne die zu prägende Dichtungslage, formschlüssig aneinander anliegen, ergibt sich aufgrund der Geometrie der Prägeformen eine besondere Ausgestaltung der Wellenstruktur innerhalb der Wölbung. Da sich die Prägeformen in den Bereichen der späteren Flanken der Wellenberge und Wellentäler stärker aneinander annähern als in den Bereichen der Maxima der Wellenberge und Minima der Wellentäler, ist die Materialdicke im Bereich der Flanken der Wellenberge und Wellentäler geringer als in den übrigen Bereichen der Wellenstruktur. Die Wellenstruktur wird erfindungsgemäß dabei so erzeugt, dass eine Flankenverjüngung von 10 bis 40 %, bevorzugt von 10 bis 35 %, besonders bevorzugt von 15 bis 30 %, gegenüber der Materialdicke der Dichtungslage im Bereich der Wellenberge oder -täler, jeweils senkrecht zur Materialoberfläche gemessen, zu beobachten ist. Die Ausprägung von Wellenbergen und Wellentälern im Bereich der Wellenstruktur führt aufgrund der Auslenkung zu beiden Oberflächen der Dichtungslage hin insgesamt zu einer effektiven Aufdickung im Bereich der Wölbung. Der Abstand zwischen den Hüllkurven, welche die Wellenberge auf beiden Oberflächen der Dichtungslage miteinander verbindet, ist größer als die Dicke der originären Dichtungslage vor Erzeugung der Wellenstruktur. Diese effektive Aufdickung in Wechselwirkung mit der Flankenverpressung führt letztendlich dazu, dass die Wölbung deutlich schwerer komprimierbar ist, als wenn die Wellenstruktur nicht vorhanden wäre. Auf diese Weise wird also eine sich selbst abstützende Wölbung erzeugt, welche ein äußerst langlebiges Dichtelement darstellt. Der Raumbedarf ist dennoch nicht größer als bei einer herkömmlichen Sicke ohne Wellenstruktur.

Durch die Ausgestaltung des Flankenbereichs der Wölbung wird erfindungsgemäß innerhalb der makroskopischen Wölbung in der metallischen Dichtungslage in deren Flankenbereich eine Art Feinstruktur gebildet. Diese Feinstruktur in Form von mindestens zwei aufeinander folgenden Wellen sorgt für eine effektive Aufdickung und Versteifung der Wölbung und somit dafür, dass die Wölbung insgesamt erheblich schwerer komprimiert werden kann als bei einem Fehlen der Feinstruktur. Auf diese Weise wird eine sich aus sich selbst heraus versteifende Wölbung gebildet, die ohne zusätzliche Maßnahmen als äußerst verlässliches und langlebiges Dichtelement wirkt. Auf diese Weise kann der Raumbedarf erheblich verringert werden. Er ist in der Regel nicht größer als bei einer herkömmlichen Sicke oder Halbsicke.

Das Grundprofil der Wölbung - also der grundsätzliche Verlauf der Wölbung ohne Berücksichtigung der Wellenstruktur im Flankenbereich - kann demjenigen einer herkömmlichen Sicke oder Halbsicke entsprechen. In einem Querschnitt in Breitenrichtung hat die Wölbung also beispielsweise einen grundsätzlich bogen- oder trapezförmigen Verlauf. Auch Omega-förmige, dreieckige oder sonstige Querschnittsprofile sind denkbar. Die Querschnitte können einen Scheitelpunkt oder ein Plateau an der höchsten Erhebung der Wölbung aufweisen. Im Falle einer Vollsicke besitzt die Wölbung zwei Sickenfüße an den gegenüberliegenden Fußpunkten der Wölbung sowie entsprechend zwei Flankenbereiche, die in Richtung auf den Scheitelpunkt der Sicke hin ansteigen. Anstelle eines Scheitelpunktes kann, wie bereits ausgeführt, auch ein Scheitelplateau vorhanden sein, also ein breiterer Bereich gleichbleibender Höhe. Es sind sowohl symmetrische als auch unsymmetrische Wölbungsquerschnitte möglich. Im Falle der Ausgestaltung der Wölbung als Halbsicke ist entsprechend nur ein Sickenfuß und auch nur ein Flankenbereich vorhanden. Der Scheitelpunkt entspricht dabei quasi einem zweiten Sickenfuß auf der anderen Seite des Flankenbereichs. Das Querschnittsprofil entspricht demnach jeweils dem halbierten Querschnittsprofil einer Vollsicke, also beispielsweise einem halbierten Bogen oder Trapez. Derartige Formen sind, wie bereits erwähnt, von herkömmlichen Sicken der Dichtungen des Standes der Technik prinzipiell bekannt. Die grundsätzliche Ausgestaltung der Wölbung der erfindungsgemäßen Flachdichtung unterscheidet sich nicht von der Form der Sicken oder Halbsicken des Standes der Technik. Der Unterschied besteht lediglich darin, dass im Flankenbereich der Wölbung die bereits beschriebene Wellenstruktur vorgesehen ist.

Im Falle einer Vollsicke sind zwei von dem jeweiligen Fuß in Richtung auf den Scheitel ansteigende Flankenbereiche pro Wölbung vorhanden. Grundsätzlich ist es möglich, die Wellenstruktur lediglich in einem der beiden Flankenbereiche vorzusehen. Bevorzugt ist es jedoch, in beiden Flankenbereichen eine Wellenstruktur mit jeweils mindestens zwei Wellen und pro Welle mit einem Wellenberg und einem Wellental anzuordnen. Besonders bevorzugt ist die Wellenstruktur in den beiden Flankenbereichen gleichartig ausgebildet. Es ist jedoch auch eine von Flankenbereich zu Flankenbereich verschiedene Ausbildung der Wellenstruktur möglich. Die gleichartigen oder verschiedenen Wellenstrukturen können jeweils auch mit unterschiedlich ausgebildeten Flankenbereichen - also asymmetrischen Querschnitten der Grundstruktur der Wölbung - kombiniert werden. Möglich ist es weiterhin, die Grundstruktur der Wölbung und/oder die Wellenstruktur in Längserstreckungsrichtung der Wölbung zu variieren. Beispielsweise können sich die Höhe der Wölbung, die Breite der Wölbung und/oder die Steilheit der einen oder mehreren Flanken der Wölbung in Längserstreckungsrichtung ändern. Gleiches gilt im Hinblick auf die Ausbildung der Wellenstruktur in einem oder mehreren der Flankenbereiche. Mit dieser Variation ist eine gezielte Anpassung der Wölbung und ihrer Verformbarkeit an die abzudichtenden Gegenflächen und die Betriebsbedingungen im Einbauszustand der metallischen Flachdichtung möglich.

Der Verlauf der Wölbung in Längserstreckungsrichtung kann grundsätzlich jede beliebige Form haben, bei der die Länge größer ist als die Breite. In ihrer Längserstreckung kann die Wölbung linear, gekrümmt, beispielsweise bogenförmig oder mäandrierend, ein- oder mehrfach gewinkelt oder in ähnlicher Weise verlaufen. Auch sich gabelnde Formen sind möglich. Die Wölbung kann ringförmig in sich geschlossen verlaufen oder eine offene Form mit diskreten Enden besitzen. Im Falle eines in sich geschlossenen Verlaufs ist eine Anordnung der Wölbung bevorzugt, bei der diese eine in der Dichtungslage ausgebildete Durchgangsöffnung umgibt. Bei dieser Öffnung kann es sich grundsätzlich um eine beliebige Durchgangsöffnung der Dichtung handeln - im Falle einer Zylinderkopfdichtung also beispielsweise um eine Brennraumöffnung, eine Öffnung für Kühlwasser oder Öl oder eine Schraubenöffnung. Es können auch mehrere Durchgangsöffnungen gleichzeitig von einer Wölbung als Dichtelement umgeben sein. Dabei kann es beispielsweise vorteilhaft sein, die Wölbung an dynamisch stärker belasteten Öffnungsrändern (z.B. Brennraumöffnung) etwas tiefer auszuprägen als an dynamisch weniger stark belasteten Öffnungsrändern (z.B. Schraubenöffnung). Die mit Wellenstruktur versehene Wölbung der erfindungsgemäßen Flachdichtung kann grundsätzlich in derselben Art und Weise auf der metallischen Dichtungslage angeordnet werden wie herkömmliche Dichtsicken oder Abstützsicken. Sie lässt sich also auch als Abstützelement in der erfindungsgemäßen metallischen Flachdichtung einsetzen. In diesem Fall ist es nicht erforderlich, dass die Wölbung eine Durchgangsöffnung vollständig einschließt. Die Wölbung kann also auch beispielsweise um eine Schraubenöffnung oder um eine sonstige Öffnung herum so angeordnet sein, dass sie diese Öffnung nur teilweise umgibt. Darüber hinaus ist es auch möglich, die Wölbung ohne unmittelbaren Zusammenhang mit einer Durchgangsöffnung als Abstützelement auf der Dichtungslage vorzusehen, beispielsweise im so genannten Hinterland der Dichtung, also in Richtung auf den Außenrand der Dichtung hin. Möglich ist beispielsweise eine lineare Anordnung des Abstützelements parallel zu einer der Außenkanten der Dichtung. Dabei können prinzipiell auch mehrere Abstützelemente nebeneinander angeordnet sein oder mäandrierend einen breiteren Flächenabschnitt bedecken. Werden die Wölbungen in einer Dichtung sowohl als Dichtelement als auch als Abstützelement eingesetzt, ist die Höhe des Abstützelements oft geringer als die des Dichtelements.

Die Längserstreckungsrichtung der Wellen innerhalb der Wellenstruktur fällt grundsätzlich mit der Längserstreckungsrichtung der Wölbung insgesamt zusammen. Das Querschnittsprofil der Wellen kann sinusförmig verlaufen. Unter dem Querschnittsprofil ist hier erneut der Querschnitt in der Breitenrichtung der Wellenstruktur zu verstehen. Der Querschnitt eines jeden Wellentals und Wellenbergs innerhalb des sinusförmigen Wellenprofils ist dabei bogenförmig, insbesondere kreisbogenförmig oder elliptisch. Die Wellenberge und Wellentäler der Wellenstruktur können aber jeweils auch einen dreieckigen, trapezförmigen oder sonstigen Querschnitt aufweisen.

Erfindungsgemäß ist es ausreichend, wenn die Wellenstruktur ausschließlich in einem Flankenbereich der Wölbung vorhanden ist. Bevorzugt ist es jedoch, wenn sich die Wellenstruktur über die gesamte Wölbungsbreite erstreckt. Die Wellenstruktur mit abwechselnden Wellenbergen und Wellentälern ist also nicht nur in den Flankenbereichen, sondern auch im Bereich des Scheitelpunktes oder des Scheitelplateaus der Wölbung vorhanden. Besonders bevorzugt sind Wellenberge und Wellentäler dabei gleichmäßig über den gesamten Verlauf der Wölbung angeordnet. Dies bedeutet, dass die sich von Wellental zu benachbartem Wellental beziehungsweise von Wellenberg bis zu dem benachbarten Wellenberg erstreckenden Abschnitte der Wellenstruktur in etwa die gleiche Breite aufweisen. Unter der Breite eines Abschnitts zwischen benachbarten Wellenbergen ist hier der Abstand zwischen zwei parallelen Linien zu verstehen, welche durch die Scheitelpunkte benachbarter Wellenberge hindurchgehen und die Ebene des ersten Niveaus und des zweiten Niveaus senkrecht schneiden. Analog ist die Breite der Abschnitte der Wellentäler zu verstehen.

Hinsichtlich des Querschnittsprofils der Wölbung in der Breitenrichtung ist es so, dass der Flankenbereich im Fall einer Halbsicke oder die Flankenbereiche im Falle einer Vollsicke vom ersten Niveau in Richtung auf das zweite Niveau hin stetig ansteigen. Der Gesamtverlauf der Wölbung ist dabei, wie erwähnt, beispielsweise trapezförmig, bevorzugt aber kreisbogenförmig oder elliptisch. In den letztgenannten Fällen besitzt eine Hüllkurve, die die Scheitelpunkte der einzelnen Wellenberge miteinander verbindet, einen kreisbogenförmigen oder elliptischen Verlauf. Gleiches gilt für eine Hüllkurve, welche die Minima der Wellentäler miteinander verbindet. Die Höhe der Scheitelpunkte der einzelnen Wellenberge nimmt dabei also vom Wölbungsfuß in Richtung auf den Wölbungsscheitel stetig, aber nicht in gleichem Maße zu. Für die Höhe der einzelnen Stufen von Wellenberg zu Wellenberg bzw. Wellental zu Wellental über eine solche Wölbung hinweg ergibt sich dabei, dass die Höhendifferenz von einer zur nächst höheren Stufe in Richtung auf den Scheitel der Wölbung hin immer geringer wird. Misst man also die Höhe, mit welcher die einzelnen Scheitelpunkte der Wellenberge über das erste Niveau vorstehen und bildet man die Differenz der Höhen jeweils zweier benachbarter Scheitelpunkte, so nimmt diese Differenz in Richtung vom Fußpunkt der Wölbung hin auf den Scheitelpunkt ab.

Im Hinblick auf die Ausgestaltung der Wellenstruktur innerhalb der Wölbung haben sich solche Ausbildungen als besonders geeignet erwiesen, in denen von den Fußpunkten zum Scheitelpunkt stetig ansteigende Flankenbereiche vorhanden sind, in denen eine möglichst gleichmäßige und mit relativ geringer Strukturgröße ausgebildete Wellenstruktur vorhanden ist. Das Verhältnis der Wellenstruktur zur Gesamtstruktur der Wölbung kann wie folgt beschrieben werden. In einem Querschnitt in der Breitenrichtung der Wölbung, also in einem Querschnitt senkrecht zur Längserstreckungsrichtung, kann eine Mittellinie festgelegt werden, welche in der Mitte der Dichtungslage, also bei halber Materialstärke, über die Wölbung hinweg verläuft. Im Bereich der Wellenstruktur folgt der Verlauf der Mittellinie also dem Verlauf der Wellenstruktur. Außerdem lassen sich in demselben Querschnitt der Wölbung zwei weitere Linien konstruieren, die nachfolgend als erste und zweite Verbindungslinie bezeichnet werden. Beide Verbindungslinien setzen sich aus jeweils geraden Linienabschnitten zusammen. Im Falle der ersten Verbindungslinie verbinden die geraden Linienabschnitte jeweils die Minima benachbarter Wellentäler auf der Seite der ersten Oberfläche der Dichtungslage miteinander. Im Fall der zweiten Verbindungslinie verbinden die geraden Linienabschnitte jeweils die Minima benachbarter Wellentäler auf der Seite der zweiten Oberfläche der Dichtungslage miteinander. Die Wellenstruktur innerhalb der Wölbung ist nun so ausgestaltet, dass die Mittellinie an keiner Stelle im Bereich der Wölbung die erste oder die zweite Verbindungslinie schneidet. Dies ist nur bei relativ geringen Tiefen der Wellentäler möglich. Gerade diese vergleichsweise geringen Amplituden sorgen jedoch für eine sehr gleichmäßige und effiziente Abstützung über den Bereich der Wölbung hinweg.

Die Wellenstruktur kann über die gesamte Länge der Wölbung hin ausgebildet sein oder auch nur abschnittsweise in einem oder mehreren Abschnitten entlang der Längserstreckung der Wölbung. Bevorzugt ist es, die Wellenstruktur über die gesamte Länge der Wölbung hin auszubilden. Aus fertigungstechnischer Sicht ist es außerdem bevorzugt, die Wellenstruktur über die gesamte Länge der Wölbung hin gleichmäßig auszugestalten. Es ist jedoch ebenfalls möglich, Anzahl, Form und/oder Höhe der Wellen in der Längserstreckungsrichtung der Wölbung zu variieren. Auf diese Weise kann die Steifigkeit der Wölbung in der Längserstreckungsrichtung gezielt variiert werden.

Die sich selbst versteifende Sicke ist für sich allein genommen als Dichtungselement selbst für schwierig abzudichtende Durchgangsöffnungen wie die Brenngasöffnungen in Zylinderkopf- oder Abgaskrümmerdichtungen vollkommen ausreichend und hervorragend geeignet. Ihre Dichtwirkung übertrifft die Dichtwirkung einer herkömmlichen Sicke vergleichbarer Form bei Weitem. Dies liegt auch daran, dass im Bereich der Wellenberge auf beiden Seiten der Dichtungslage eine Vielzahl von Dichtlinien erzeugt wird. Diese Vielzahl der Dichtlinien sorgt für eine hervorragende Anpassung an die abzudichtenden Gegenflächen und für eine überragende Dichtwirkung, die auch unter starker und dauerhafter Belastung oder permanenten Dichtspaltbewegungen über sehr lange Zeit beibehalten wird. Das Rückfederverhalten ist deutlich besser als dasjenige herkömmlicher Sicken gleicher Grundform.

Die mit der Wellenstruktur versehene Wölbung ist als alleiniges Dichtelement für eine Durchgangsöffnung also vollkommen ausreichend. Das erfindungsgemäße Dichtelement ist insbesondere für solche Anwendungen geeignet, in denen das Dichtelement im Krafthauptschluss liegt. Dies schließt jedoch nicht aus, das erfindungsgemäße Dichtelement in Kombination mit einem oder weiteren anderen Dichtelementen einzusetzen. Die mit Wellenstruktur versehene Wölbung könnte theoretisch auch mit einem Stopperelement in Kombination verwendet werden. Dies ist aber grundsätzlich nicht bevorzugt, da die mit Wellenstruktur versehene Wölbung keines weiteren Abstützelementes bedarf. Eine sinnvolle Möglichkeit besteht jedoch darin, die mit Wellenstruktur versehene Wölbung mit einer herkömmlichen Sicke als zusätzlichem Dichtelement zu kombinieren. Dabei können die Steifigkeiten der beiden Elemente je nach Wunsch aufeinander abgestimmt werden. Zum Beispiel ist es möglich, die herkömmliche Sicke weniger steif auszulegen als die benachbarte mit Wellenstruktur versehene Wölbung, sodass letztere auch als Abstützelement für die benachbarte Sicke wirken kann. Es ist jedoch umgekehrt auch möglich, über die Formgebung der Sicke diese so steif auszulegen, dass die mit Wellenstruktur versehene Wölbung im Kraftnebenschluss zu liegen kommt.

Wie bereits erwähnt, muss die mit Wellenstruktur versehene Wölbung nicht unbedingt als in sich geschlossenes Dichtelement für eine Durchgangsöffnung eingesetzt werden. Es ist vielmehr ebenso möglich, das Element als reines Abstützelement einzusetzen. Hier kann beispielsweise an eine Abstützung im Randbereich der Dichtung gedacht werden. Ebenso ist es möglich, die mit Wellenstruktur versehene Wölbung als Abstützelement für Elastomer-Dichtelemente einzusetzen.

Auch zur Aufnahme einer Beschichtung ist die mit Wellenstruktur versehene Wölbung bestens geeignet. Die durch die Strukturierung erzeugten Wellentäler wirken als Kammern, welche ein Wegfließen der Beschichtung verhindern und so zu einer besseren Haftung der Beschichtung auf der Unterlage beitragen. Verwendet werden können alle grundsätzlich für metallische Flachdichtungen bereits bekannte Beschichtungen, beispielsweise solche, welche die Mikroabdichtung oder die Gleitreibeigenschaften verbessern. Dabei kann durch die Art des Auftrags z.B. eine Anhäufung von Beschichtungsmaterial auf der konkaven Seite der Wölbung erzielt werden. Bevorzugt wird dabei die Konkavität aber nicht vollständig gefüllt, sondern maximal bis zu 80 %, besonders bevorzugt bis zu 50 % ihres Volumens.

Die erfindungsgemäße metallische Flachdichtung ist bereits als lediglich einlagige Dichtung zu verwirklichen. Durch Verwendung der mit einer Wellenstruktur versehenen Wölbung kann auf zusätzliche Elemente wie Stopperelemente verzichtet werden. Die erfindungsgemäße metallische Flachdichtung kann jedoch auch eine Mehrlagendichtung mit zwei oder mehr Dichtungslagen sein, von denen dann zumindest eine wenigstens eine mit Wellenstruktur versehene Wölbung aufweist. Die weitere Dichtungslage kann grundsätzlich beliebig ausgestaltet sein. Sie kann, muss aber nicht, eine oder mehrere mit Wellenstruktur versehene Wölbungen - sei es als Abdichtelement oder als Abstützelement - aufweisen. Bevorzugt ist es, wenn der mit Wellenstruktur versehenen Wölbung in der weiteren Dichtungslage ebenfalls ein Abstütz- oder Abdichtelement gegenüberliegt, vorzugsweise spiegelbildlich zu der mit Wellenstruktur versehenen Wölbung. Bei diesem weiteren Element kann es sich entweder um eine mit Wellenstruktur versehene Wölbung handeln, eine Sicke oder Halbsicke. Auch ein ebener Abschnitt der weiteren Dichtungslage kann der Wölbung mit Wellenstruktur gegenüber angeordnet werden. Dieser bildet eine glatte Unterlage, auf der die Wellenberge gut aufsitzen können. Die Wölbungen oder Sicken der weiteren Dichtungslage können so angeordnet sein, dass ihr Scheitel dem Scheitel der mit der Wellenstruktur versehenen Wölbung der ersten Dichtungslage gegenüberliegt. Die Scheitel der beiden sich gegenüberliegenden Elemente können jedoch auch voneinander weg weisen. Die Ausdehnungen der verschiedenen Dichtungslagen innerhalb der metallischen Flachdichtung können gleich oder voneinander verschieden sein. Eine oder mehrere der Dichtungslagen der metallischen Flachdichtung können gegenüber wenigstens einer ausgedehnteren Lage verkürzt sein und beispielsweise den Außenrand der Dichtung frei lassen. Sie können beispielsweise lediglich als eine eine Durchgangsöffnung ringförmig oder mehrere Durchgangsöffnungen brillenförmig umgebende Einlage ausgebildet sein. Auch diejenige Dichtungslage, die die mit Wellenstruktur versehene Wölbung aufweist, kann eine solche verkürzte Dichtungslage sein.

Die übrigen in der metallischen Flachdichtung verwendeten Dichtungselemente können grundsätzlich demjenigen entsprechen, was bereits aus dem Stand der Technik bekannt ist. Beispielsweise können weitere Abdichtelemente in Form von Sicken oder Elastomer-Dichtwülsten vorhanden sein. Abstützelemente in Form von Sicken oder Halbsicken oder Materialaufdickungen in Form von Prägungen sind ebenfalls möglich. Zur symmetrischen Verteilung der Wirkhöhen der Dichtelemente können Kröpfungen vorhanden sein. Auf die Möglichkeit der Beschichtung, welche auf allen oder einem Teil der Lagen ganzflächig oder teilweise vorhanden sein kann, wurde ebenfalls bereits hingewiesen. Die Herstellung der erfindungsgemäßen metallischen Flachdichtung kann aus herkömmlichen Materialien mit im Stand der Technik üblichen Verfahren und Werkzeugen erfolgen. Bevorzugtes Material für die wenigstens eine metallische Dichtungslage ist Stahl, insbesondere federharter Stahl oder nichtrostender Federstahl. Die federharten Eigenschaften können dabei bereits vor Einbringen der Wölbung vorhanden sein oder hinterher, z.B. mittels thermischer Behandlung, erzielt werden. Die weiteren Lagen können aus demselben oder einem anderen Material wie beispielsweise Kohlenstoffstahl oder, insbesondere bei Dichtungslagen ohne eingeprägte Strukturen, nichtfedernden Stählen, bestehen. Bei Anwendungen im Abgasbereich - einschließlich Abgasnachbehandlung und Abgasaufbereitung - ist die Verwendung von Hochtemperaturstählen, insbesondere von Ni-reichen Stählen, ggf. auch für die eine metallische Dichtlage empfehlenswert, da die Dichtungen hier Temperaturen von über 800 °C ausgesetzt sein können.

Eine bevorzugte Anwendung der erfindungsgemäßen metallischen Flachdichtung ist die als Flachdichtung im Bereich eines Verbrennungsmotors, insbesondere als Zylinderkopfdichtung oder Abgaskrümmerdichtung. In diesem Fall ist es besonders bevorzugt, die mit Wellenstruktur versehene Wölbung als Abdichtelement für die Brenngasöffnungen der Dichtung zu verwenden. Der Begriff Brenngas schließt Abgase und Abgase, die der Verbrennung erneut zugeführt werden, explizit mit ein. Dabei ist es in an sich bekannter Weise möglich, im Bereich zwischen benachbarten Brenngasöffnungen die Wölbungen zu einem gemeinsamen Wölbungsabschnitt zu vereinigen. Idealerweise wird dabei der von der Brenngasöffnung entfernte Flankenbereich der Wölbung mit dem entsprechenden Flankenbereich der Wölbung der benachbarten Brenngasöffnung vereinigt, ohne dass diese in den eigentlichen Stegbereich zwischen den Brenngasöffnungen eintreten. Die beiden hierzu komplementären Flankenbereiche werden gemeinsam unter Ausbildung einer Wölbung mit Feinstruktur durch den Stegbereich geführt und trennen sich auf dessen gegenüberliegender Seite unter Vereinigung mit einem anderen Flankenbereich wieder. Im Stegbereich kann es jedoch aus Platzgründen zweckmäßig sein, die Anzahl der Wellen zu reduzieren, sodass nicht sämtliche Wellen der sich vereinigenden Wellenstrukturen über den Stegbereich fortlaufen.

Die Erfindung soll nachfolgend anhand von Zeichnungen näher erläutert werden. Die Zeichnungen sind schematischer Natur und beschreiben lediglich bevorzugte Ausführungsbeispiele der Erfindung, auf die die Erfindung jedoch nicht beschränkt ist. In den Zeichnungen bezeichnen gleiche Bezugszeichen gleiche Teile. Zur leichteren Unterscheidung werden in den Schnittdarstellungen, nicht aber in den Draufsichten die zu verschiedenen Flankenbereichen gehörigen Elemente mit einem Stern gekennzeichnet, unterschiedliche Lagen mit einem Apostroph und Elemente, die zu unterschiedlichen Durchgangsöffnungen gehören mit einem Stern. Im Einzelnen zeigen
- Figur 1: eine Draufsicht auf eine erfindungsgemäße metallische Flachdichtung am Beispiel einer Zylinderkopfdichtung;
- Figur 2: eine Teildraufsicht auf eine erfindungsgemäße metallische Flachdichtung am Beispiel einer Abgaskrümmerdichtung;
- Figur 3: eine Draufsicht auf eine erfindungsgemäße metallische Flachdichtung am Beispiel einer Hochdruckpumpendichtung
- Figuren 4 bis 11: Teilquerschnitte durch die Dichtung gemäß Figur 1 entlang der Linie X-X;
- Figuren 12 bis 15: Teilquerschnitte der erfindungsgemäßen metallischen Flachdichtung gemäß Figur 1 entlang der Linie Y-Y;
- Figur 16: einen Teilquerschnitt durch die erfindungsgemäße Dichtung gemäß Figur 2 entlang der Linie Z-Z;
- Figur 17: einen weiteren Teilquerschnitt durch eine einlagige metallische Flachdichtung;
- Figuren 18 bis 26: Teilquerschnitte durch verschiedene Ausführungsbeispiele zweilagiger metallischer Flachdichtungen in einem Teilquerschnitt entlang der Linie Y-Y;
- Figuren 27 und 28: Teilquerschnitte im selben Ausschnitt wie die vorangegangenen Figuren, jedoch am Beispiel dreilagiger Flachdichtungen;
- Figuren 29 bis 31: weitere Beispiele zweilagiger erfindungsgemäßer Flachdichtungen im Teilquerschnitt, wobei jeweils eine der Dichtungslagen gegenüber der anderen verkürzt ist;
- Figur 32: eine Figuren 3 bis 6 entsprechende Darstellung zur Erläuterung bevorzugter Abmessungen;
- Figur 33: eine erfindungsgemäße Verwendung einer Zylinderkopfdichtung zur Abdichtung eines Motors mit Laufbuchsen;
- Figur 34: ein weiteres Beispiel einer zweilagigen erfindungsgemäßen Flachdichtung im Teilquerschnitt entlang der Linie Z'-Z' in Figur 1;
- Figur 35: einen Teilquerschnitt durch ein Beispiel einer vierlagigen erfindungsgemäßen Flachdichtung;
- Figur 36: einen Teilquerschnitt durch ein Beispiel einer fünflagigen erfindungsgemäßen Flachdichtung; und
- Figur 37: ein weiteres Besipiel einer einlagigen erfindungsgemäßen Flachdichtung im Teilquerschnitt entlang der Linie Y'-Y' in Figur 1.

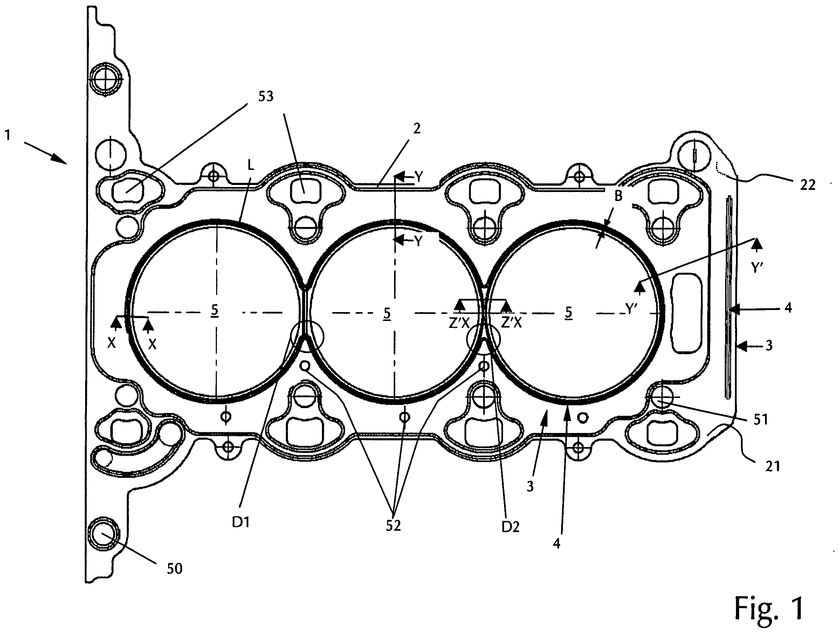

Figur 1 zeigt eine Draufsicht auf eine metallische Flachdichtung 1 am Beispiel einer Zylinderkopfdichtung. Zu sehen ist die Draufsicht auf eine Dichtungslage 2 mit einer ersten Oberfläche 21 sowie einer dieser gegenüberliegenden zweiten Oberfläche 22. Die Brenngasöffnungen 5 werden von jeweils einem Dichtelement abgedichtet, welches von einer in die Dichtungslage 2 eingeprägten und über die Oberfläche 21 vorstehenden kreisringförmigen Wölbung 3 gebildet ist. Die Längsausdehnung der Wölbung 3 in Umfangsrichtung um die Brenngasöffnung 5 herum ist mit der Länge L wesentlich größer als die Breite B der Wölbung 3. In der Wölbung 3 ist eine Feinstruktur ausgebildet, die aus mehreren Wellen besteht, die sich über die gesamte Breite B der Wölbung 3 erstrecken. Die Längserstreckungsrichtung der einzelnen Wellen entspricht dabei der Längserstreckungsrichtung der Wölbung 3. Die Wellenstruktur 4 ist hier durch die konzentrischen Linien angedeutet. Neben den Brenngasöffnungen 5 sind zum Außenrand der Dichtung hin noch weitere Durchgangsöffnungen 50, insbesondere Schraubenöffnungen 51, Kühlwasseröffnungen 52 und Öldurchgangsöffnungen 53 vorhanden. Am rechten Seitenrand der Dichtung findet sich zudem eine langgestreckte, geradlinig verlaufende Wölbung 3, die als Abstützelement dieses Seitenrandes dient In den Bereichen D1 und D2 sind zwei verschiedene Möglichkeiten gezeigt, wie die Wölbungen 3 in den verengten Bereich zwischen zwei Brennraumdurchgangsöffnungen 5 geführt werden können. Im in D1 gezeigten Beispiel ist der Übergangsbereich sehr kurz gehalten und beide Flankenbereiche 32 der Wölbung 3 erfahren in ihrer Längserstreckung einen starken Richtungswechsel, der für beide Flankenbereiche unterschiedlich stark ausgeprägt ist. Im in D2 gezeigten Beispiel ändert sich nur die Richtung des von der Brennraumdurchgangsöffnung entfernt liegenden Flankenbereichs, der unmittelbar in den Flankenbereich der Wölbung der benachbarten Brennraumdurchgangsöffnung übergeht, während die den Brennraumdurchgangsöffnungen zugewandten Flankenbereiche keinen Richtungswechsel erfahren und nur langsam zusammen geführt werden.

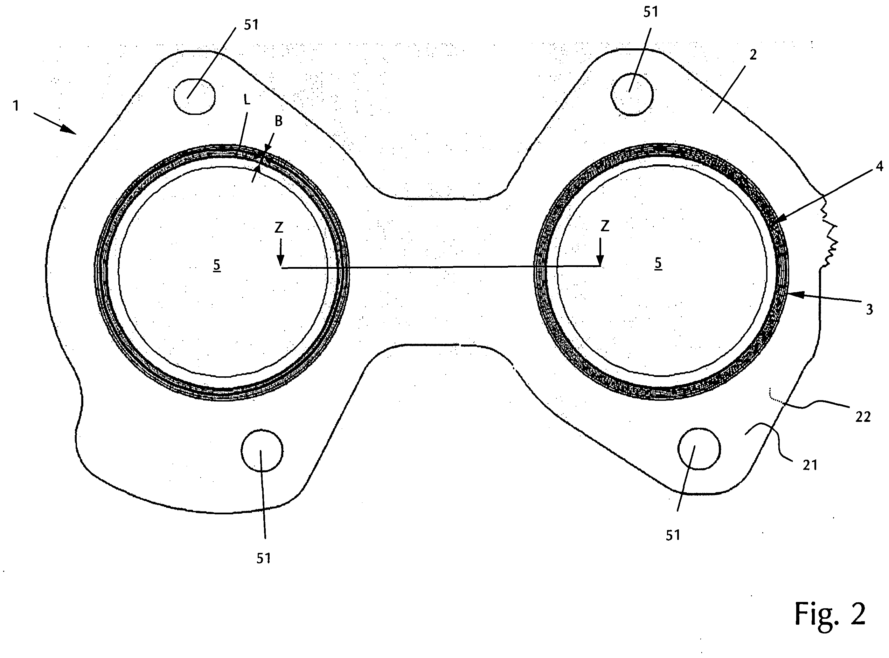

Figur 2 zeigt eine Teildraufsicht auf eine andere metallische Flachdichtung 1 am Beispiel einer Abgaskrümmerdichtung. Gezeigt ist hier der Bereich um zwei von beispielsweise vier Brenngasöffnungen 5 herum. Die Brenngasöffnungen sind wiederum von einer Wölbung 3 mit wellenförmiger Feinstruktur 4 umgeben. Die Dichtung weist daneben noch Schraubenöffnungen 51 auf.

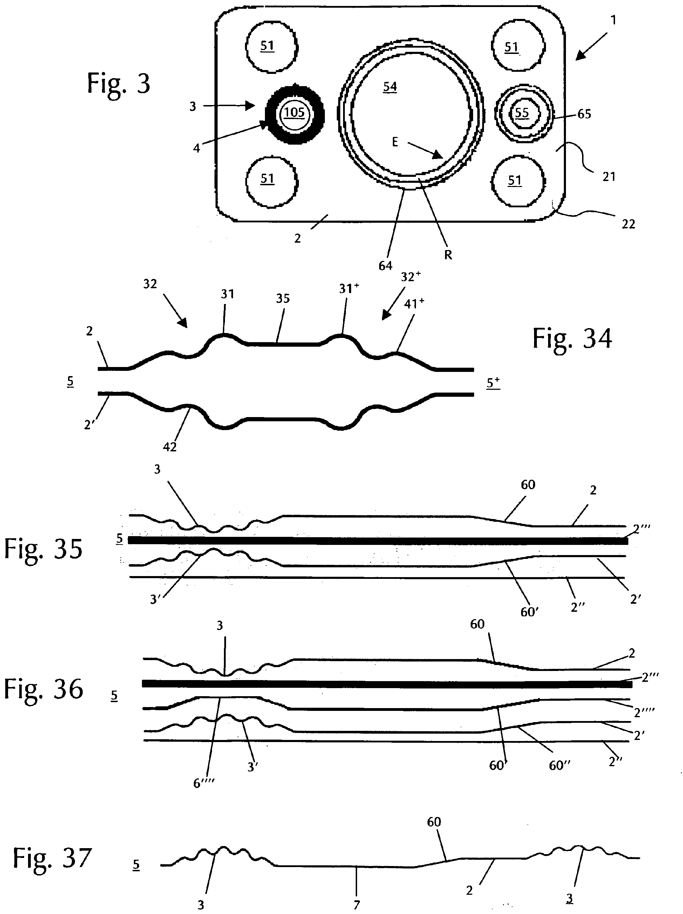

Figur 3 zeigt als weiteres Anwendungsbeispiel für die erfindungsgemäße Wölbung 3 eine Hochdruck führende Dichtung 1, wobei die Hochdrucköffnung 105 nicht gleichzeitig die größte Durchgangsöffnung in der Dichtung ist, sondern die Öffnung 54, die eine Buchse mit einem Kolben gegen den Zylinderkopf einer Hochdruckpumpe abdichtet. Folglich wird die Dichtungsebene E vom Randbereich R um die Öffnung 54, auf der Innenseite der Sicke 64 aufgespannt. Die Dichtung weist weiterhin eine Niederdrucköffnung 55 auf, die mit einer Sicke 65 abgedichtet ist, sowie vier Schraubenlöcher 51. Hier wird die Hochdrucköffnung 105 von der erfindungsgemäßen Wölbung 3 umgeben.

Die Ausgestaltung der Wölbung 3 mit der Wellenstruktur 4 soll in den nachfolgenden Querschnittsdarstellungen näher erläutert werden. Alle Querschnittsdarstellungen entsprechen einem Schnitt durch die Breitenrichtung der Wölbung, also senkrecht zur Längserstreckungsrichtung derselben. Diese Querschnittsdarstellungen können sich nicht nur auf eine Zylinderkopfdichtung oder Abgaskrümmerdichtung beziehen, sondern gleichermaßen beispielsweise auf Hochdruckdichtungen, wobei dann das im Folgenden für die Brennraumöffnungen 5 Erläuterte insbesondere für die hochdruckführende Öffnung 105 gilt.

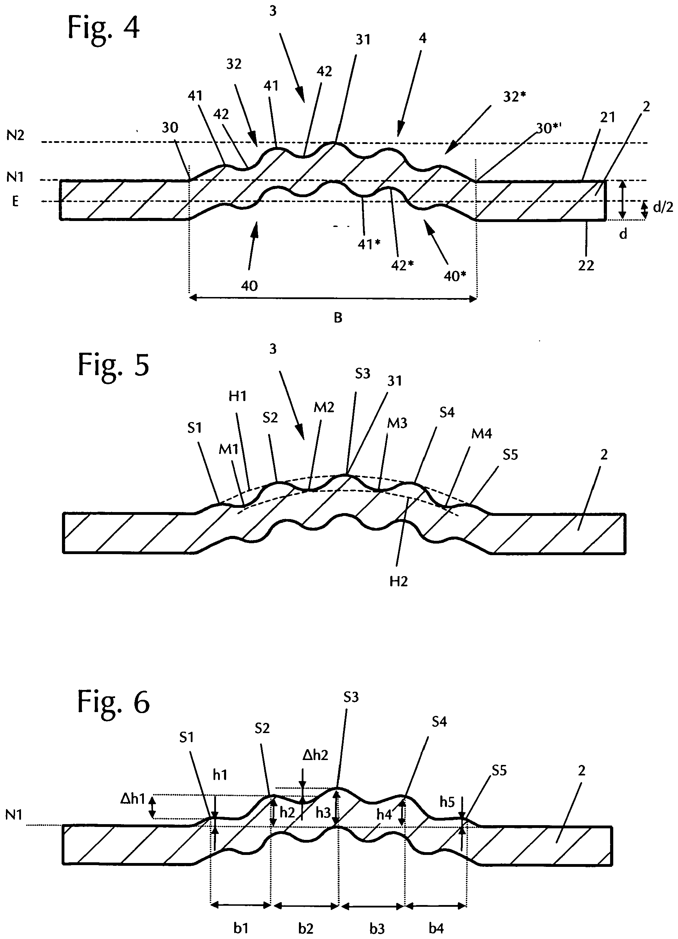

Figuren 4 bis 7 entsprechen Querschnitten entlang der Linie X-X in Figur 1. Die Querschnitte unterscheiden sich lediglich geringfügig voneinander und weisen etwas voneinander abweichende Abmessungen der Wölbungen und der Wellenstruktur auf.
Wie in Figur 4 zu sehen, springt die Wölbung 3 über die erste Oberfläche 21 der Dichtungslage 2 vor. Sie erstreckt sich zwischen den beiden Fußpunkten 30 und 30*, an denen die Steigung einer an diese beiden Punkte angelegten Tangente gerade noch 0 ist - ebenso wie in den seitlich der Wölbung 3 anschließenden planen Bereichen. Im Bereich der Wölbung 3, die zwischen den Fußpunkten 30 und 30* mit einer Breite B verläuft, ist die Steigung dagegen ungleich 0. In Höhenrichtung verläuft die Wölbung 3 zwischen einem ersten Niveau N1, welches die Fußpunkte 30 und 30* umfasst, und einem zweiten Niveau N2, welches den Scheitelpunkt 31, den höchsten Punkt der Wölbung 3, enthält. Beide Niveaus N1 und N2 verlaufen parallel zur Dichtungsebene E der Dichtungslage 2. Diese Ebene E verläuft in der Mitte, also bei halber Materialstärke und wird von den die Brenngasöffnungen unmittelbar umgebenden Bereichen der Dichtung aufgespannt. Zwischen den Fußpunkten 30 und 30* sowie dem Scheitelpunkt 31 weist die Wölbung 3 zwei Flankenbereiche 32 und 32* auf, welche stetig von den Fußpunkten in Richtung auf den Scheitel 31 hin ansteigen. In jedem dieser Flankenbereiche 32 und 32* sind zwei Wellen 40 ausgebildet. Jede dieser Wellen 40 wiederum besitzt von der Seite 21 her betrachtet je zwei Wellenberge 41 und zwei Wellentäler 42, die einander abwechseln. Gleiches gilt für die Seite 22 der Dichtungslage 2. Bei der Zählung der Wellenberge und Wellentäler ist anzumerken, dass weder die Fußpunkte 30 und 30* noch der Scheitelpunkt 31 bei der Ermittlung der Anzahl der Wellen 40 mitberücksichtigt werden, da nur ein Scheitelpunkt 31 vorhanden ist. Jede der Flanken 32 bzw. 32* weist demnach zwei Auslenkungen in Richtung auf das obere Niveau N2 sowie zwei Auslenkungen in Richtung auf das untere Niveau N1 auf.

Figur 5 verdeutlicht den insgesamt bogenförmigen Verlauf der Wölbung 3. Verbindet man die einzelnen Scheitelpunkte der Wellenberge 41 - also die Punkte S1, S2, S3, S4 sowie S5 - mit einer Hüllkurve (H1) miteinander, ergibt sich ein Kurvenverlauf, der einem Kreisbogensegment entspricht. Gleiches ist der Fall, wenn man die Minima M1 bis M4 der Wellentäler 42 mit einer Hüllkurve (H2) miteinander verbindet. Innerhalb einer Makrostruktur (der Wölbung 3) mit einem bogenförmigen Verlauf ist also eine Feinstruktur (die Wellenstruktur 4) ausgebildet, in welcher mehrere Wellen 40 mit geringerer Breite und geringerer Höhe als die Wölbung 3 insgesamt in der Dichtungslage 2 innerhalb der Wölbungsbreite B erzeugt sind.

Figur 6 verdeutlicht den Höhenverlauf der Wellenstruktur 4 innerhalb der Wölbung 3. Wie aus der Figur ersichtlich, ist die Strukturbreite der Wellenstruktur innerhalb der Wölbung 3 relativ ähnlich. Unter der Strukturbreite soll hier der Abstand zwischen benachbarten Wellenbergen 41 verstanden werden. Der Abstand wird dabei zwischen senkrechten Linien gemessen, welche die jeweiligen Scheitelpunkte S1 bis S5 schneiden und senkrecht zu den Niveaus N1 und N2 sowie der Dichtungsebene E der Dichtungslage 2 verlaufen. Die Abstände b1 und b4 einerseits und b2 und b3 andererseits sind jeweils im Wesentlichen identisch. Je Flankenbereich 32 und 32* werden durch die Wellenstruktur verschiedene Stufen gebildet, welche kontinuierlich zum Scheitelpunkt 31 hin ansteigen. Die Höhendifferenz zwischen den Stufen (Δh1, Δh2, ...) jedoch nimmt dabei nicht kontinuierlich zu, sondern verringert sich mit zunehmender Annäherung an den Scheitelpunkt 31. So ist beispielsweise die Höhendifferenz Δh1 zwischen dem Scheitelpunkt S1 und dem benachbarten Scheitelpunkt S2 erheblich größer als die Höhendifferenz Δh2 zwischen dem Scheitelpunkt S2 und dem nächsten Scheitelpunkt S3. Strukturbreite und Stufenhöhe können je nach den Anforderungen variiert werden. Beide Werte unterscheiden sich von Figur 3 zu Figur 4 und Figur 5 geringfügig.

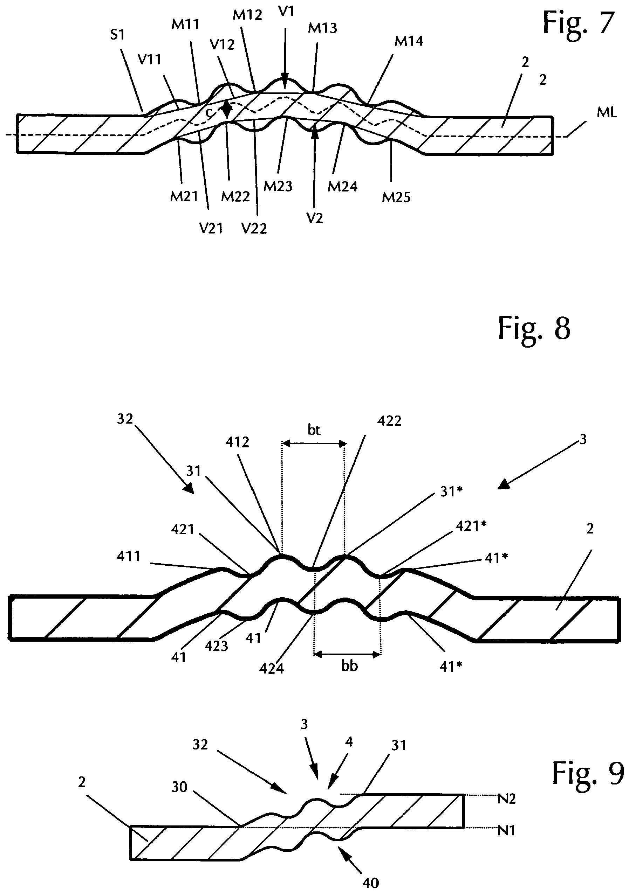

Figur 7 verdeutlicht eine weitere bevorzugte Eigenschaft der Wellenstruktur 4 innerhalb der Wölbung 3. Im Querschnitt durch die Dichtungslage 2 im Bereich der Wölbung 3 ist hier eine Mittellinie ML festgelegt, die bei halber Materialstärke (d/2), bezogen auf die jeweilige Materialstärke d der Dichtungslage 2, verläuft Die Bestimmung der halben Materialstärke erfolgt dabei an jeder Stelle senkrecht zur Dichtungsebene E. Im Bereich der Wellenstruktur 4 folgt die Mittellinie ML somit dem Verlauf der Dichtungslage 2. Außerdem sind in der Figur zwei weitere Linien eingezeichnet, die als Verbindungslinien V1 und V2 bezeichnet werden. Diese Verbindungslinien bestehen aus einzelnen geraden Linienabschnitten V11, V12, ... bzw. V21, V22 usw. Diese geraden Linienabschnitte verbinden jeweils die Minima M11 bis M14 bzw. M21 bis M25 der Wellentäler 42 auf der ersten Oberfläche 21 bzw. der zweiten Oberfläche 22 der Dichtungslage 2 miteinander. Wie in Figur 7 erkennbar, schneidet die Mittellinie ML über die gesamte Wölbung hinweg in keinem Punkt eine der Verbindungslinien V1 oder V2. Dies ist deshalb nicht der Fall, weil die Wellenstruktur, wie vorstehend beschrieben, nur eine geringe Höhenausdehnung besitzt. Es handelt sich um eine Feinstruktur innerhalb der Makrostruktur der Wölbung. Bevorzugt ist diese Feinstruktur kontinuierlich über die gesamte Wölbungsbreite ausgebildet. Sie erstreckt sich also nicht nur in den Flankenbreichen 32 und 32*, sondern reicht über den Scheitelpunkt 31 der Wölbung hinweg und endet an den jeweiligen Füßen 30 und 30* der Wölbung 3.

Figur 8 erläutert die Zählweise der Wellenberge und -täler am Sonderfall einer Wölbung 3 mit genau zwei Scheitelpunkten 31, 31* auf der konvexen Seite der Wölbung, zwischen denen genau ein Wellental 422 liegt, das nicht als Plateau ausgebildet ist. Die Breite bt des Wellentals 422 - gemessen von Scheitelpunkt zu Scheitelpunkt der angrenzenden Wellenberge - ist also maximal um 20 %, bevorzugt maximal um 15 %, verschieden von der Breite bb des Wellenberges 41 - gemessen von Talpunkt zu Talpunkt der angrenzenden Wellentäler - der den Scheitelpunkt 31 aufweist. Nur in diesem Sonderfall wird bei der Anzahl Wellenberge nicht nur der Wellenberg 411, sondern auch der Wellenberg 412, der mit den Scheitelpunkt 31 identisch ist, mitgezählt. Ebenso wird neben dem Wellental 421 auch das Wellental 422, das zwischen den beiden Scheitelpunkten liegt, als Wellental des Flankenbereichs 32 mitgezählt. Letzteres Wellental 422 zählt auch zu den Wellentälern des gegenüberliegenden Flankenbereichs 32*, wird also doppelt gezählt Es soll noch einmal betont werden, dass dies nicht für Fälle mit mehr oder weniger als zwei Scheitelpunkten auf der konvexen Seite der Wölbung 3 gelten soll, ebenso wenig wie für Fälle mit einem Plateau zwischen den genau zwei Scheitelpunkten.

Figur 9 zeigt ein weiteres Ausführungsbeispiel einer erfindungsgemäßen metallischen Flachdichtung im Teilquerschnitt im Bereich einer Wölbung 3. Im Unterschied zu den vorangegangenen Figuren ist die Wölbung 3 hier in Form einer Halbsicke ausgebildet. Die Wölbung 3 steigt also hier von einem Fußpunkt 30 in Richtung auf den Scheitelpunkt 31 hin an, an welchen anschließend dann ein gerader Abschnitt der Dichtungslage 2 verläuft. Zwischen den Niveaus N1 und N2 ist also lediglich ein einziger Flankenbereich 32 vorhanden, welcher eine Wellenstruktur 4 mit zwei Wellen 40 mit jeweils wiederum einem Wellenberg und einem Wellental aufweist.

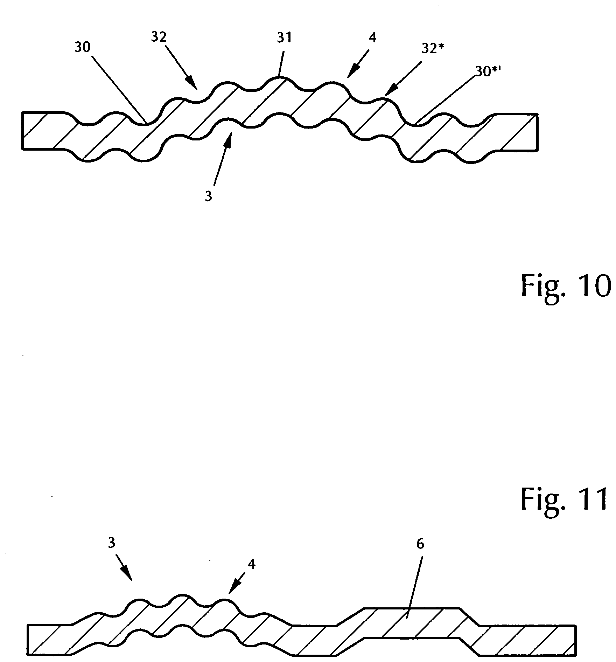

Figur 10 zeigt ein Beispiel einer Wellenstruktur, die sogar noch über die beiden Wölbungsfüße 30, 30* hinaus seitlich in den geraden Bereich der Dichtungslage 2 hineinreicht. Auch dieses ist im Rahmen der Erfindung möglich, solange die beiden Flankenbereiche 32, 32* auf die beschriebene Weise mit der Wellenstruktur 4 versehen sind.

Figur 11 beschreibt eine mit Wellenstruktur 4 versehene Wölbung 3, die im Wesentlichen der in Figuren 4 bis 7 beschriebenen entspricht. Die Wölbung 3 ist hier mit einer Sicke 6 kombiniert, die benachbart zur Wölbung 3 verläuft und die Brenngasöffnung ebenfalls in sich geschlossen und konzentrisch zur Wölbung 3 umgibt. Die Sicke 6 kann dabei sowohl radial innerhalb als auch außerhalb der Wölbung 3 angeordnet werden. Da die Wölbung 3 eine größere Höhe als die Sicke 6 aufweist, liegt sie im Einbauzustand der metallischen Flachdichtung 1 im Krafthauptschluss und nimmt einen Großteil der Pressungskräfte auf. Bevorzugt ist die Wölbung 3 mit der Wellenstruktur 4 dabei so ausgelegt, das im zusammengespannten Zustand alle Wellenberge an den abzudichtenden Gegenflächen anliegen können und auf diese Weise Dichtlinien mit den abzudichtenden Gegenflächen ausbilden.

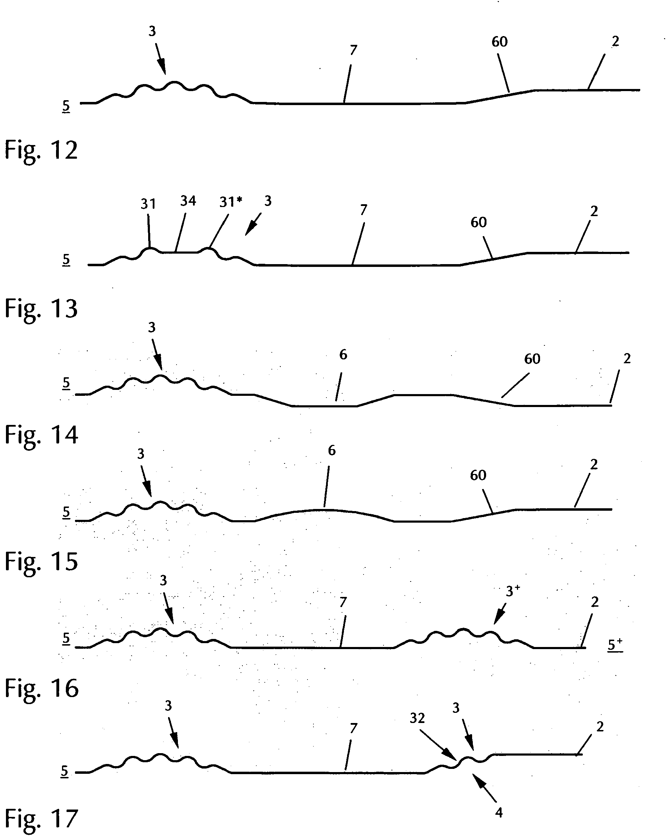

Die nachfolgenden Figuren 12 bis 31 und 34 bis 37 verdeutlichen den Verlauf der Dichtungslagen 2 lediglich noch mit einer Strichdarstellung; die Abstände zwischen den verschiedenen Dichtelementen sind hierbei nur schematisch und entsprechen insbesondere im Verhältnis der Abstände untereinander keiner maßstabsgetreuen Darstellung. Figuren 12 bis 15 sind dabei Teilquerschnitte zwischen der Brenngasöffnung 5 und einem Dichtungsrand der metallischen Flachdichtung 1. Die Brenngasöffnung 5 ist jeweils von einer mit Wellenstruktur versehenen Wölbung 3 eingeschlossen. In der Dichtung gemäß Figur 12 folgt auf die Wölbung 3 ein gerader Abschnitt 7, an den sich wiederum eine in Richtung der Wölbung 3 aufspringende Halbsicke 60 anschließt. Diese Halbsicke 60 läuft üblicherweise entlang des Außenrandes der Dichtung oder umschließt andere Öffnungen als die Öffnung 5. In keinem Fall ist sie konzentrisch zur Wölbung 3 geführt. Im Unterschied zur Figur 12 ist in Figur 13 die Wölbung nicht durchgängig mit einer wellenförmigen Feinstruktur versehen, sondern weist in der Mitte der Wölbung zwischen den beiden Scheitelpunkten 31, 31* ein Plateau 34 auf. Nicht dargestellt, aber ebenso möglich wäre eine Variante der Ausführungsform aus Figur 13, bei der das Plateau auf Ebene des Scheitelpunkts liegt, also eine Scheitelebene bildet.

Die nachfolgenden Dichtungen unterscheiden sich jeweils in der Ausgestaltung der rechts in der Figur dargestellten Außenrandabschnitte. Im Unterschied zu den Figuren 12 und 13 ist in Figur 14 anstelle des geraden Abschnitts 7 eine Sicke 6 ausgebildet, die im Vergleich zur Wölbung 3 in die entgegengesetzte Richtung weist. Während die Sicke der Figur 14 einen trapezförmigen Querschnitt aufweisen, ist die Sicke 6 in der Dichtung gemäß Figur 15 eine runde Sicke mit bogenförmigem Querschnittsverlauf, die zudem in dieselbe Richtung wie die Wölbung 3 weist. Wie bereits erwähnt sind die Abstände nicht maßstabsgetreu, vielmehr sind in den Ausführungsbeispielen nach Figuren 14 und 15 die Elemente 3 und 6 sehr dicht benachbart, während der Abstand zwischen 6 und 60 im Allgemeinen um ein Vielfaches größer ist.

Figur 16 zeigt einen Querschnitt im Bereich zwischen zwei Brenngasöffnungen 5, 5⁺ der Abgaskrümmerdichtung aus Figur 2. Diese sind jeweils von einer mit Wellenstruktur versehenen Wölbung 3, 3⁺ umgeben. Zwischen beiden Wölbungen 3, 3⁺ befindet sich ein gerader Abschnitt 7. Bei dieser Dichtung ist im Stegbereich zwischen den Brenngasöffnungen ausreichend Platz vorhanden, so dass die beiden Wölbungen unabhängig voneinander durch den Stegbereich geführt werden können.

In Figur 17 ist erneut ein Ausschnitt zwischen Brenngasöffnung 5 und Dichtungsrand dargestellt Im Unterschied zur Dichtung gemäß Figur 12 ist hier anstelle der Halbsicke 60 eine Wölbung 3 mit einer grundsätzlich einer Halbsicke entsprechenden Form ausgebildet. Entsprechend ist nur ein mit Wellenstruktur 4 versehener Flankenbereich 32 vorhanden.

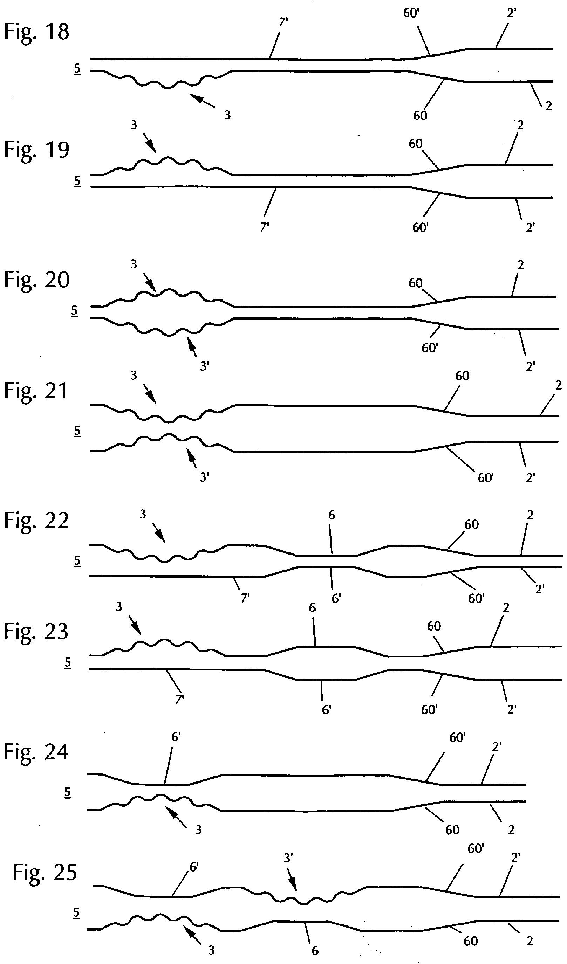

Figuren 18 bis 26 zeigen Beispiele zweilagiger metallischer Flachdichtungen im Querschnitt im Bereich zwischen einer Brenngasöffnung 5 und dem Dichtungsrand. Die untere Dichtungslage der Dichtung gemäß Figur 18 entspricht grundsätzlich derjenigen in Figur 12. Ihr gegenüber ist eine weitere Dichtungslage 2' vorhanden, die im an die Brenngasöffnung 5 anschließenden Bereich einen vollkommen ebenen Abschnitt 7' aufweist. Lediglich zum Dichtungsrand hin ist eine zur Halbsicke 60 der Dichtungslage 2 spiegelbildlich angeordnete Halbsicke 60' vorhanden. Die in Figur 19 dargestellte Dichtung entspricht der in Figur 18 gezeigten in spiegelbildlicher Anordnung. Im Falle einer Zylinderkopfdichtung beispielsweise kann die mit der Wölbung 3 versehene Dichtungslage in Richtung zum Motorblock hin orientiert sein oder umgekehrt auch in Richtung auf den Zylinderkopf hin.

Figuren 20 und 21 zeigen jeweils zweilagige metallische Flachdichtungen, in denen der Wölbung 3 der ersten Dichtungslage 2 in der zweiten Dichtungslage 2' ebenfalls eine mit Wellenstruktur versehene Wölbung 3' gegenüberliegt. Im Falle der Figur 20 weisen die Scheitelpunkte der Wölbungen 3 und 3' voneinander weg, im Fall der Figur 21 aufeinander zu.

Die obere Dichtungslage der Figur 22 entspricht im Wesentlichen der Dichtungslage der Dichtung gemäß der Figur 13, jedoch in umgekehrter Orientierung. Daneben ist eine zweite Dichtungslage 2' vorhanden, die im Randbereich spiegelbildlich zur ersten Dichtungslage 2 ausgebildet ist und im der Wölbung 3 gegenüberliegenden Bereich einen geraden Abschnitt 7' aufweist, der eine günstige Unterlage für die Wölbung 3 mit ihren Wellenbergen und Wellentälern aufweist.

In der Dichtung gemäß Figur 23 ist die obere Dichtungslage verglichen mit der entsprechenden Dichtungslage in der Dichtung gemäß Figur 22 umgekehrt angeordnet. Auch die untere Dichtungslage 2' ist gegenüber der unteren Dichtungslage der Figur 21 spiegelbildlich angeordnet.

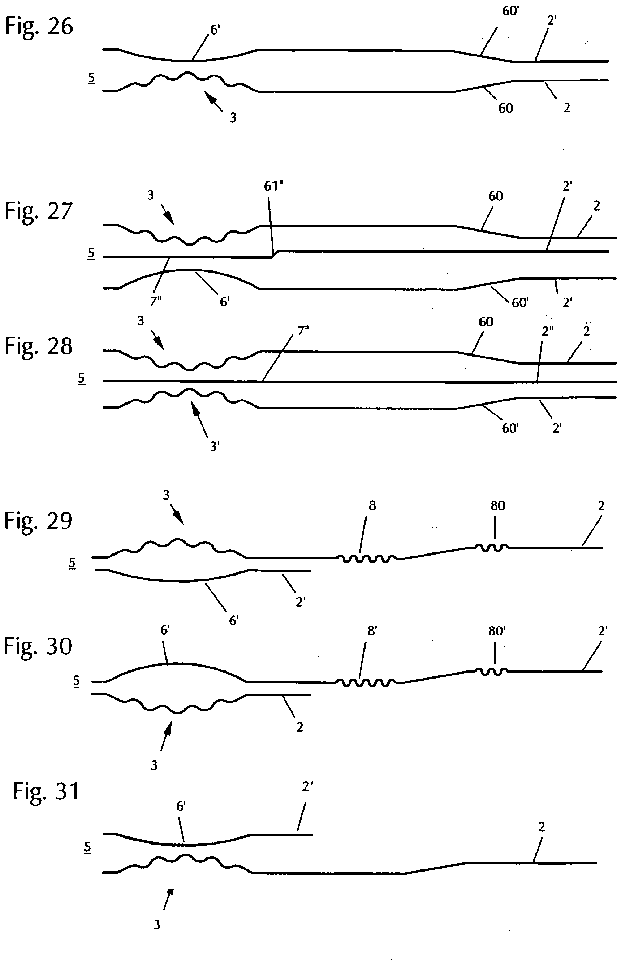

Figuren 24 bis 26 zeigen metallische Flachdichtungen, in denen der Wölbung 3 der ersten Dichtungslage 2 in der zweiten Dichtungslage 2' jeweils eine Sicke 6' gegenüberliegt. Die Scheitel der Wölbungen 3 weisen dabei jeweils auf die Scheitel der Sicken 6' zu. In den Dichtungen gemäß Figuren 24 und 25 werden Sicken 6' mit trapezförmigem Querschnittsprofil eingesetzt, in der Dichtung gemäß Figur 26 eine runde Sicke 6' mit bogenförmigen Querschnitt. In der Dichtung gemäß Figur 25 ist in jeder Dichtungslage ein weiteres Dichtelement vorhanden. In der ersten Dichtungslage 2 schließt sich an die Wölbung 3 eine Sicke 6 mit trapezförmigem Querschnitt an. Ihr gegenüberliegend und mit dem Scheitel auf den Scheitel der Sicke 6 zuweisend liegt eine Wölbung 3'.

Figuren 27 und 28 zeigen Beispiele dreilagiger erfindungsgemäßer metallischer Flachdichtungen. Die beiden äußeren Dichtungslagen der Dichtung gemäß Figur 27 entsprechen grundsätzlich denjenigen der Dichtung gemäß Figur 26, jedoch sind sie in umgekehrter Orientierung angeordnet. Zwischen beiden Dichtungslagen liegt eine weitere Dichtungslage 2", die im Wesentlichen eben ausgebildet ist. Lediglich benachbart zum ebenen Abschnitt 7", der zwischen Wölbung 3 und Sicke 6' angeordnet ist, befindet sich, da die Wölbung 3 höher ist als die Sicke 6', zur Symmetrisierung eine Kröpfung 61".

Die beiden äußeren Dichtungslagen der Dichtung gemäß Figur 28 sind jeweils spiegelbildlich zueinander angeordnet und weisen als Dichtelemente für die Brenngasöffnung je eine Wölbung 3 bzw. 3' auf. Zwischen diesen liegt eine völlig ebene weitere Dichtungslage 2".

Figuren 29 bis 31 zeigen Beispiele zweilagiger metallischer Flachdichtungen, in denen eine der beiden Dichtungslagen gegenüber der anderen verkürzt ist. Derartige verkürzte Dichtungslagen werden oft als "shim" bezeichnet. Das Dichtelement liegt in der Regel im Krafthauptschluss. Die verkürzte Dichtungslage besteht lediglich aus einem die Brenngasöffnung 5 umgebenden Ring. Die die einzelnen Brenngasöffnungen 5 umgebenden Ringe können jeweils über Stege miteinander zusammenhängen, sodass sich eine insgesamt brillenartige verkürzte Dichtungslage ergibt. In allen drei Fällen wird die Brenngasöffnung 5 jeweils von einer mit Wellenstruktur versehenen Wölbung 3 und einer bogenförmigen Sicke 6' abgedichtet, die sich in den verschiedenen Dichtungslagen gegenüberliegen. Während die Sicke 6' und die Wölbung 3 in den Ausführungsbeispielen der Figuren 29 und 30 voneinander weg weisen, zeigen sie in Figur 31 aufeinander zu, so dass ihre konkaven Seiten auf der Dichtungsober- und unterseite zu liegen kommen. Im Fall der Dichtungen gemäß Figuren 29 und 31 ist die mit der Sicke 6' versehene Dichtungslage 2' die verkürzte Lage, im Fall der Figur 30 ist es die Dichtungslage 2, welche die Wölbung 3 aufweist. Im Hinterland der jeweiligen Dichtungen, zum Rand der Dichtung hin, weisen die beide Dichtungen der Figuren 29 und 30 weitere wellenartige Strukturen 8 bzw. 8' und 80 bzw. 80' auf. Die wellenartigen Prägungen 8, 8' und 80, 80' dienen in erster Linie der gezielten Aufdickung von Dichtungsbereichen.

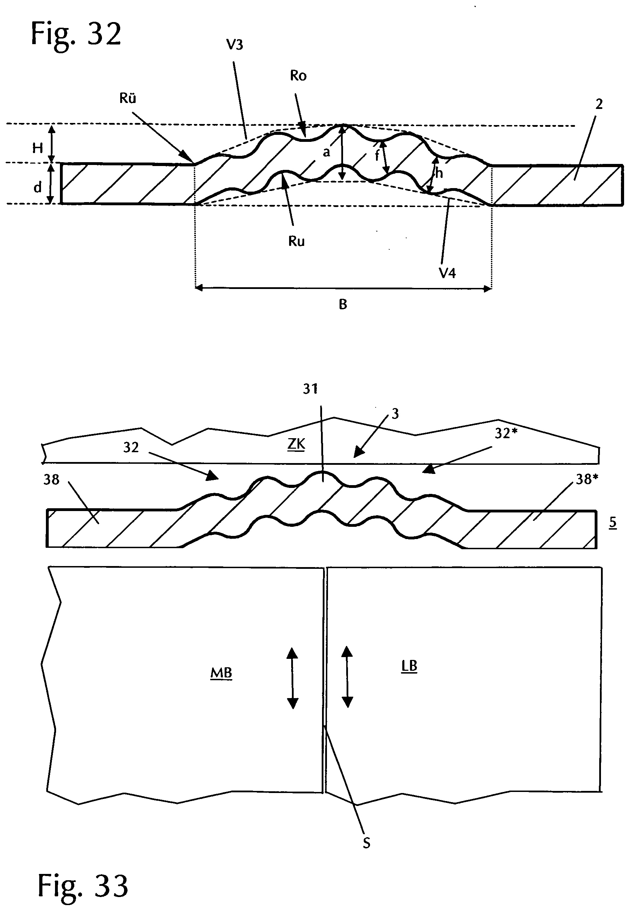

Nachfolgend sollen einige exemplarische Abmessungen für die mit Wellenstruktur versehene Wölbung angegeben werden. Die Bereiche, auf die sich die in der nachfolgenden Tabelle zusammengestellten Werte beziehen, sind in Fig. 32 eingezeichnet Diese Figur entspricht ansonsten Figuren 4 bis 7 und muss hier nicht weiter erläutert werden. Außerdem wird auf Angaben in den Figuren 6 und 7 zurückgegriffen. Die Werte beziehen sich konkret auf Zylinderkopfdichtungen - und zwar bei Verwendung der mit Wellenstruktur versehenen Wölbung als alleiniges Abdichtelement einer Brennraumöffnung - und sind in Zylinderkopfdichtungen für Pkw-Motoren einerseits und für Nutzfahrzeug (Nfz)-Motoren andererseits unterteilt. Für beide Typen sind jeweils grundsätzlich geeignete und bevorzugte Bereiche definiert. Die angegebenen Werte können jedoch gleichermaßen für andere erfindungsgemäße Dichtungen wie zum Beispiel Abgaskrümmerdichtungen herangezogen werden.

**Tabelle 1**

| **Bezugszeichen** | **Messgröße** | **Pkw allgemein** | **Pkw bevorzugt** | **Nfz allgemein** | **Nfz bevorzugt** |
|---|---|---|---|---|---|
| d | Ausgangsblechdicke / mm | 0,10 - 0,40 | 0,20 - 0,30 | 0,20 -0,60 | 0,30 -0,50 |
| a | Aufdickung (Wellenhöhe) / mm | 0,03 - 0,20 | 0,05 - 0,12 | 0,05 - 0,30 | 0,05 - 0,25 |
| c | Ausdünnung / mm | 0,03 - 0,20 | 0,05 - 0,12 | 0,05 -0,30 | 0,05 -0,25 |
| Ro | Radius oben / mm | 0,10 - 0,30 | 0,10 - 0,20 | 0,10 - 0,40 | 0,10 - 0,30 |
| Ru | Radius unten / mm | 0,10 - 0,30 | 0,10 - 0,20 | 0,10 -0,40 | 0,10 - 0,30 |
| Rü | Radius Übergang / mm | 0,0 - 0,40 | 0,10 - 0,20 | 0,0 - 0,40 | 0,10 - 0,20 |
| B | Bogenbreite / mm | 1,5 - 4,0 | 1,5 - 3,0 | 1,5 - 5,0 | 2,0 - 4,0 |
| H | Bogenhöhe / mm | 0,05 - 0,8 | 0,1 - 0,50 | 0,10 - 1,0 | 0,20 - 0,70 |
| | Wellenanzahl | 2 - 12 | 2 - 6 | 2 - 12 | 2 - 6 |
| h/f | Flankenverpressung | 0,65-0,95 | 0,70-0,90 | 0,60-0,95 | 0,70-0,90 |
| | Verhältnis Wellenhöhe/Bogenhöhe (a/H) | 0,1 - 0,8 | 0,2 - 0,5 | 0,1 - 0,8 | 0,2 -0,5 |

"Aufdickung" ist die absolute Erhöhung der Materialstärke gegenüber der originären Materialstärke der Dichtungslage (Ausgangsblechdicke d) infolge der Wellenstruktur. Dieses Maß wird als Abstand zwischen zwei Verbindungskurven V3 und V4 gemessen, die aus geraden Linienabschnitten bestehen, welche die Maxima der Wellenberge auf beiden Oberflächen 21 und 22 der Dichtungslage miteinander verbinden (analog zu Verbindungskurven V1 und V2 der Figur 7, welche die Minima der Wellentäler verbinden). "Ausdünnung" ist die absolute Verringerung der Materialstärke der Dichtungslage im Bereich der Wellentäler im Vergleich zur originären Materialstärke d der Dichtungslage. Sie ergibt sich aus dem Abstand c zwischen den Verbindungskurven V1 und V2 in Figur 7.

Figur 33 demonstriert die Verwendung des erfindungsgemäßen Dichtelements 3 zur platzsparenden Abdichtung von Motoren, bei denen Laufbuchsen LB in den Motorblock MB eingesetzt sind, gegenüber dem Zylinderkopf ZK. Hierbei wird mittels der Wölbung 3 der Spalt zwischen Motorblock MB und Laufbuchse LB überbrückt, beide Flankenbereiche 32 und 32* sorgen dafür, dass die Dichtung den Bewegungen von Motorblock MB und Laufbuchse LB gegeneinander ausgleicht, so dass zumindest die Bereiche 38 und 38*, die außerhalb der Fußpunkte der Wölbung liegen, auf dem Motorblock und der Laufbuchse aufliegen, während gleichzeitig der Scheitelpunkt 31 am Zylinderkopf ZK anliegt.

Figur 34 stellt den engen Stegbereich zwischen den Brennraumdurchgangsöffnungen 5 in einer - im gezeigten Beispiel zweilagigen -Zylinderkopfdichtung entsprechend dem Schnitt Z'-Z' aus Figur 1 dar. Die Flankenbereiche 32 und 32⁺ der benachbarten Öffnungen 5 und 5⁺ laufen unter Ausbildung eines kleinen Stegplateaus 35 im gezeigten Abschnitt benachbart durch den Stegbereich. Die beiden Dichtungslagen sind im gezeigten Schnitt spiegelsymmetrisch zueinander ausgebildet. Die Flankenbereiche 32 und 32⁺ zeigen jeweils zwei Wellenberge und -täler.

Figuren 35 und 36 zeigen beispielhaft vier- bzw. fünflagige erfindungsgemäße metallische Flachdichtungen. Figur 35 zeigt zwei Dichtungslagen 2, 2', die jeweils Wölbungen 3, 3' im Bereich um die Durchgangsöffnung 5 sowie Halbsicken 60, 60' in der Nähe der Außenkante zeigen. Die beiden Lagen sind spiegelsymmetrisch um eine weitere Lage 2"' angeordnet, die selbst als Glattblech ausgeführt ist und durch ihre größere Dicke vor allem der genauen Dickeneinstellung der Dichtung dient. Daneben weist die Dichtung noch ein weiteres Glattblech 2" auf, das beispielsweise bei der Abdichtung von Kühlmittelkanälen im Motorblock vorteilhaft sein kann. Die Ausführungsform nach Figur 36 unterscheidet sich von der nach Figur 35 durch den Einschub einer weiteren Dichtungslage 2"", die im Bereich um die Durchgangsöffnung 5 eine Sicke 6"" aufweist. Anders als in den vorhergehenden Beispielen weist die konkave Seite dieser Sicke 6"" nicht auf die konkave Seite einer Wölbung 3", sondern auf deren konvexe Seite. Diese Anordnung kann vorteilhaft sein, wenn die Kräfte der Abdichtelemente sich durch Reihenschaltung gegenseitig verstärken sollen und kann auch bei Dichtungen mit weniger Lagen eingesetzt werden.

Figur 37 zeigt abschließend einen Schnitt entlang der Linie Y'-Y' aus Figur 1 am Beispiel einer einlagigen Dichtung. Die Brennraumöffnung ist mit einer erfindungsgemäßen Wölbung abgedichtet und nach einem ebenen Abschnitt folgt eine Halbsicke 60, die die Wasserlöcher 52 gegen den Dichtungsaußenrand abdichtet. Zwischen dieser Halbsicke 60 und der Außenkante ist hier jedoch zusätzlich noch eine erfindungsgemäße Wölbung 3 angebracht, die in dieselbe Richtung wie die Wölbung 3 am Brennraum zeigt. Die Wölbung 3 ist gegenüber der Wölbung 3 jedoch um die Höhe der Halbsicke 60 versetzt Zudem weist die Wölbung 3 eine geringere Höhe als die Wölbung 3 auf.

## Patentansprüche

1. Metallische Flachdichtung (1) mit wenigstens einer metallischen Dichtungslage (2), die überwiegend plan ausgebildet ist und eine erste und eine zweite Oberfläche (21, 22) aufweist, zwischen deren planen Bereichen mittig eine Dichtungsebene (E) der Dichtungslage (2) verläuft, wobei in der Dichtungslage (2) eine Wölbung (3) ausgebildet ist, die über die erste Oberfläche (21) der Dichtungslage (2) vorsteht und eine größere Länge (L) als Breite (B) aufweist, wobei die Wölbung (3) ein erstes Niveau (N1) in Form einer virtuellen Ebene besitzt, die parallel zur Dichtungsebene (E) durch den Fuß (30) der Wölbung (3) auf der ersten Oberfläche (21) der Dichtungslage (2) verläuft, und ein zweites Niveau (N2) in Form einer weiteren virtuellen Ebene, die durch den höchsten Punkt (31) der Wölbung (3) ebenfalls parallel zur Dichtungsebene (E) der Dichtungslage (2) verläuft, wobei die Wölbung (3) zwischen beiden Niveaus (N1, N2) einen ansteigenden Flankenbereich (32) besitzt, der eine Wellenstruktur (4) dergestalt aufweist, dass in Richtung zwischen den beiden Niveaus (N1, N2) wenigstens zwei Wellen (40) mit je einem Wellenberg (41) und einem Wellental (42) verlaufen,
**dadurch gekennzeichnet,**
**dass** im Bereich der Wellenstruktur (4) die Materialstärke der Dichtungslage (2) im Bereich der Seitenflanken um 10 bis 40 % geringer ist als die Dicke der Dichtungslage (2) im Bereich der Wellenberge (41) oder Wellentäler (42).

2. Metallische Flachdichtung nach Anspruch 1,
**dadurch gekennzeichnet,**
**dass** im Bereich der Wellenstruktur (4) die Materialstärke der Dichtungslage (2) im Bereich der Seitenflanken (43) zwischen den Wellenbergen (41) und den Wellentälern (42) um 10 bis 35 % und insbesondere 15 bis 30 % geringer ist als die Dicke der Dichtungslage (2) im Bereich der Wellenberge (41) und Wellentäler (42).

3. Metallische Flachdichtung nach einem der Ansprüche 1 oder 2,
**dadurch gekennzeichnet,**
**dass** die Wölbung (3) zumindest abschnittsweise und insbesondere in sich geschlossen um eine in der Dichtungslage (2) ausgebildete Durchgangsöffnung (5, 105) herum verläuft.

4. Metallische Flachdichtung nach Anspruch 1 bis 3,
**dadurch gekennzeichnet,**
**dass** die Wölbung (3) ausgewählt ist aus
a) einer Vollsicke mit zwei Sickenfüßen (30, 30*) und zwei zwischen den Sickenfüßen (30, 30*) zum Scheitelpunkt (31) der Sicke ansteigenden Flankenbereichen (32, 32*) oder
b) einer Halbsicke mit nur einem Sickenfuß (30) und einem Flankenbereich (32).

5. Metallische Flachdichtung nach einem der Ansprüche 1 bis 4,
**dadurch gekennzeichnet,**
**dass** der Flankenbereich (32, 32*) vom ersten Niveau (N1) zum zweiten Niveau (N2) hin stetig ansteigt und insbesondere eine die Scheitelpunkte (S1, S2, ...) der Wellenberge (41) und/oder die Minima (M1, M2, ...) der Wellentäler (42) verbindende Hüllkurve (H1, H2) einen kreisbogenförmigen oder elliptischen Verlauf besitzt.

6. Metallische Flachdichtung nach einem der Ansprüche 1 bis 5,
**dadurch gekennzeichnet,**
**dass** die Differenz (Δh1, Δh2, ...) der Höhen (h1, h2, ...), mit denen die Scheitelpunkte (S1, S2, ...) zweier benachbarter Wellenberge (41) über das erste Niveau (N1) vorstehen, in Richtung auf den Scheitelpunkt (31) der Wölbung hin abnimmt.

7. Metallische Flachdichtung nach einem der Ansprüche 1 bis 6,
**dadurch gekennzeichnet,**
**dass** die Wellenberge (41) und Wellentäler (42) im Querschnitt in Breitenrichtung der Wölbung (3) einen sinusförmigen Verlauf oder ein jeweils trapezförmiges Querschnittsprofil aufweisen.

8. Metallische Flachdichtung nach einem der Ansprüche 1 bis 7,
**dadurch gekennzeichnet,**
**dass** sich die Wellenstruktur (4) über die gesamte Breite (B) der Wölbung (3) und/oder deren gesamte Länge (L) erstreckt.

9. Metallische Flachdichtung nach einem der Ansprüche 1 bis 7,
**dadurch gekennzeichnet,**
**dass** sich die Wellenstruktur (4) nicht über die gesamte Breite (B) der Wölbung (3) erstreckt und die Wölbung (3) insbesondere ein Plateau (34) zwischen Flankenbereichen (32, 32*) mit Wellenstruktur (4) aufweist.

10. Metallische Flachdichtung nach einem der Ansprüche 1 bis 9,
**dadurch gekennzeichnet,**
**dass** die Wölbung (3) ein insgesamt bogen- oder trapezförmiges Querschnittsprofil aufweist.

11. Metallische Flachdichtung nach einem der Ansprüche 1 bis 10,
**dadurch gekennzeichnet,**
**dass** die Wellenstruktur (4) innerhalb der Wölbung (3) derart ausgebildet ist, dass eine Mittellinie (ML), welche in einem Querschnitt in der Breitenrichtung der Wölbung (3) bei halber Materialstärke (d/2) über die Wölbung (3) verläuft, an keiner Stelle eine der folgenden Linien im selben Querschnitt schneidet:
- eine erste Verbindungslinie (V1), die sich aus jeweils geraden Linienabschnitten (V11, V12...) zusammensetzt, welche die Minima (M11, M12, ...) benachbarter Wellentäler (42) auf Seiten der ersten Oberfläche (21) der Dichtungslage (2) miteinander verbindet, und
- eine zweite Verbindungslinie (V2), die sich aus jeweils geraden Linienabschnitten (V21, V22...) zusammensetzt, welche die Minima (M21, M22, ...) benachbarter Wellentäler (42) auf Seiten der zweiten Oberfläche (22) der Dichtungslage (2) miteinander verbindet.

12. Metallische Flachdichtung nach einem der vorhergehenden Ansprüche,
**dadurch gekennzeichnet,**
**dass** die Wölbung (3) die Durchgangsöffnung (5, 105) als einziges Dichtelement umgibt.

13. Metallische Flachdichtung nach einem der vorhergehenden Ansprüche,
**dadurch gekennzeichnet,**
**dass** zusätzlich zu der Wölbung (3) ein weiteres Dichtelement, insbesondere in Form einer die Durchgangsöffnung (5, 105) umgebenden Sicke (6), zur Abdichtung der Durchgangsöffnung (5, 105) vorgesehen ist.

14. Metallische Flachdichtung nach einem der Ansprüche 1 bis 13,
dadurch **gekennzeich net,**
dass sie wenigstens zwei Dichtungslagen (2, 2') aufweist, von denen wenigstens eine die mit Wellenstruktur (4) versehene Wölbung (3) aufweist.

15. Metallische Flachdichtung nach Anspruch 14,
**dadurch gekennzeichnet,**
**dass** in der weiteren Dichtungslage (2') eines der folgenden Elemente der mit Wellenstruktur (4) versehenen Wölbung (3) gegenüberliegt:
- eine mit Wellenstruktur (4') versehene Wölbung (3'), insbesondere eine zur Wölbung (3) der ersten Dichtungslage (2) spiegelbildlich angeordnete Wölbung (3'),
- eine Sicke (6') oder Halbsicke, insbesondere eine zur Wölbung (3) der ersten Dichtungslage (2) spiegelbildlich angeordnete Sicke (6') oder Halbsicke,
- ein ebener Abschnitt (7') der weiteren Dichtungslage (2').

16. Metallische Flachdichtung nach einem der Ansprüche 1 bis 15,
**dadurch gekennzeichnet,**
**dass** die Flachdichtung eine Zylinderkopfdichtung, eine Hochdruckdichtung oder eine abgasführende Dichtung, insbesondere eine Abgaskrümmerdichtung oder eine Dichtung im Bereich der Abgasaufbereitung oder Abgasnachbehandlung ist.

17. Verwendung einer metallischen Flachdichtung nach einem der vorangehenden Ansprüche zur Abdichtung zwischen einem Zylinderkopf (ZK) und einem Motorblock (MB) mit Laufbuchsen (LB),
**dadurch gekennzeichnet,**
**dass** die Wölbung (3) den Spalt (S) zwischen Motorblock (MB) und Laufbuchse (LB) überbrückt.

## Claims

1. Metallic flat gasket (1) with at least one metallic gasket layer (2), which is mainly flat and comprises a first and second surface (21, 22), a gasket plane (E) of the gasket layer (2) extending in the middle between the flat areas of the latter, wherein a protrusion (3) is formed in the gasket layer (2), which protrudes beyond the first surface (21) of the gasket layer (2) and which has a greater length (L) than width (B), wherein the protrusion (3) possesses a first level (N1) in the form of a virtual plane running parallel to the gasket plane (E) through the foot (30) of the protrusion (3) on the first surface (21) of the gasket layer (2) and a second level (N2) in the form of a further virtual plane running through the highest point (31) of the protrusion (3), also parallel to the gasket plane (E) of the gasket layer (2), wherein the protrusion (3) comprises an ascending flank area (32) between the two levels (N1, N2),
the flank area (32) comprising an undulating structure (4) so as to comprise at least two waves (40) in the direction between the two levels (N1, N2), respectively with a wave crest (41) and a wave trough (42),
**characterized in that**,
in the area of the undulating structure (4), the material thickness of the gasket layer (2) in the area of the side flanks is less by 10 to 40 % than the thickness of the gasket layer (2) in the area of the wave crests (41) or wave troughs (42).

2. Metallic flat gasket according to claim 1,
**characterized in that**,
in the area of the undulating structure (4), the material thickness of the gasket layer (2) in the area of the side flanks (43) between the wave crests (41) and the wave troughs (42) is less by 10 to 35 % and especially 15 to 30 % than the thickness of the gasket layer (2) in the area of the wave crests (41) or wave troughs (42).

3. Metallic flat gasket according to claim 1 or 2,
**characterized in that**
the protrusion (3) extends around a opening (5, 105) in the gasket layer (2), at least in sections and preferably completely.

4. Metallic flat gasket according to claims 1 to 3,
**characterized in that**
the protrusion (3) is selected from
a. a full bead with two bead feet (30, 30*) and two flank areas (32, 32*) ascending between the bead feet (30, 30*) and the bead crest (31) or
b. a half-bead with only one bead foot (30) and one flank area (32).

5. Metallic flat gasket according to one of claims 1 to 4,
**characterized in that**
the flank area (32, 32*) rises steadily from the first level (N1) to the second level (N2) and **in that** in particular an envelope curve (H1, H2) connecting the crest points (S1, S2, ...) of the wave crests (41) and/or the minima (M1, M2, ...) of the wave troughs (42) has the shape of an arc or ellipse.

6. Metallic flat gasket according to one of claims 1 to 5,
**characterized in that**
the difference (Δh1, Δh2, ...) between the heights (h1, h2, ...) at which the crest points (S1, S2, ...) of two adjacent wave crests (41) protrude beyond the first level (N1) decreases in the direction of the crest point (31) of the protrusion.

7. Metallic flat gasket according to one of claims 1 to 6,
**characterized in that**
the cross-section of the wave crests (41) and wave troughs (42) of the protrusion (3) widthways is sinusoidal or respectively has a trapezoidal cross-sectional profile.

8. Metallic flat gasket according to one of claims 1 to 7,
**characterized in that**
the undulating structure (4) extends over the complete width (B) of the protrusion (3) and/or its complete length (L).

9. Metallic flat gasket according to one of claims 1 to 7,
**characterized in that**
the undulating structure (4) does not extend over the complete width (B) of the protrusion (3) and the protrusion (3) comprises in particular a plateau (34) between the flank areas (32, 32*) with the undulating structure (4).

10. Metallic flat gasket according to one of claims 1 to 9,
**characterized in that**
the protrusion (3) exhibits an overall arc-shaped or trapezoidal cross-sectional profile.

11. Metallic flat gasket according to one of claims 1 to 10,
**characterized in that**
the undulating structure (4) within the protrusion (3) is configured in such a way that a center line (ML), the cross-section of which widthways extends over the protrusion (3) at half the material thickness (d/2) and does not intersect any of the following lines in the same cross section:
- a first connecting line (V1), which is composed of respective straight linear sections (V11, V12...) that connect the minima (M11, M12, ...) of adjacent wave troughs (42) on the side of the first surface (21) of the gasket layer (2) with each other, and
- a second connecting line (V2), which is composed of respective straight linear sections (V21, V22...) that connect the minima (M21, M22, ...) of adjacent wave troughs (42) on the side of the second surface (22) of the gasket layer (2) with each other.

12. Metallic flat gasket according to one of claims 3 to 11,
**characterized in that**
the protrusion (3) is the only sealing element surrounding the opening (5, 105).

13. Metallic flat gasket according to one of claims 3 to 11,
**characterized in that**
in addition to the protrusion (3), a further sealing element, in particular in the form of a bead surrounding the opening (5, 105), is provided for the sealing of the opening (5, 105).

14. Metallic flat gasket according to one of claims 1 to 13,
**characterized in that**
it comprises at least two gasket layers (2, 2'), of which at least one comprises a protrusion (3) with an undulating structure (4).

15. Metallic flat gasket according to claim 14,
**characterized in that**
in the further gasket layer (2'), one of the following elements lies across from the protrusion (3) with the undulating structure (4):
- a protrusion (3') with an undulating structure (4'), in particular a protrusion (3') arranged in a mirror-symmetric fashion vis-à-vis the protrusion (3) in the first gasket layer (2);
- a bead (6') or a half-bead, in particular a bead (6') or half-bead arranged in an essentially mirror-symmetric fashion vis-à-vis the protrusion (3) in the first gasket layer;
- a flat section (7') of the further gasket layer (2').

16. Metallic flat gasket according to one of claims 1 to 15,
**characterized in that**
the flat gasket is a cylinder head gasket, a high-pressure gasket or an exhaust gas guiding gasket, in particular an exhaust manifold gasket or a gasket in the area of the pre-treatment or post-treatment of the exhaust gas.

17. Use of a metallic gasket according to one of the preceding claims for sealing between a cylinder head (ZK) and an engine block (MB) with bushings (LB),
**characterized in that**
the protrusion (3) bridges the gap (S) between the engine block (MB) and the bushing (LB).

## Revendications

1. Joint plat métallique (1) avec au moins une couche (2) de joint métallique, qui est principalement plate et comprend une première et une seconde surfaces (21, 22), un plan (E) du joint de la couche de joint (2) s'étendant au milieu entre les zones plates de celles-ci, dans lequel une protubérance (3) est formée dans la couche (2) de joint, qui fait saillie au-delà de la première surface (21) de la couche (2) de joint et qui possède une longueur (L) supérieure à une largeur (B), dans lequel la protubérance (3) possède un premier niveau (N1) sous la forme d'un plan virtuel s'étendant parallèlement au plan (E) de joint à travers le pied (30) de la protubérance (3) sur la première surface (21) de la couche (2) de joint et un second niveau (N2) sous la forme d'un autre plan virtuel s'étendant à travers le point le plus haut (31) de la protubérance (3), également parallèlement au plan (E) de la couche (2) de joint, dans lequel la protubérance (3) comprend une zone de flanc ascendante (32) entre les deux niveaux (N1, N2), la zone de flanc (32) comprenant une structure ondulée (4) de manière à comprendre au moins deux vagues (40) dans la direction située entre les deux niveaux (N1, N2), respectivement avec une crête (41) de vague et un creux (42) de vague,
***caractérisé en ce que***
dans la zone de la structure ondulée (4), l'épaisseur du matériau de la couche (2) de joint dans la zone des flancs latéraux est inférieure de 10 à 40 % à l'épaisseur de la couche (2) de joint dans la zone des crêtes (41) de vague ou des creux (42) de vague.

2. Joint plat métallique selon la revendication 1,
***caractérisé en ce que***
dans la zone de la structure ondulée (4), l'épaisseur du matériau de la couche (2) de joint dans la zone des flancs latéraux (43) entre les crêtes (41) de vague et les creux (42) de vague est inférieure de 10 à 35 %, et tout particulièrement de 15 à 30 %, à l'épaisseur de la couche (2) de joint dans la zone des crêtes (41) de vague ou des creux (42) de vague.

3. Joint plat métallique selon la revendication 1 ou 2,
***caractérisé en ce que***
la protubérance (3) s'étend autour d'une ouverture de passage (5, 105) dans la couche (2) de joint, au moins en sections et de manière préférée en totalité.

4. Joint plat métallique selon les revendications 1 à 3,
***caractérisé en ce que***
la protubérance (3) est choisie entre :
a. un bourrelet complet avec deux pieds (30, 30*) de bourrelet et deux zones (32, 32*) de flanc ascendantes entre les pieds (30, 30*) de bourrelet et la crête (31) du bourrelet, ou
b. un demi bourrelet avec un seul pied (30) de bourrelet et une seule zone (32) de flanc.

5. Joint plat métallique selon l'une quelconque des revendications 1 à 4,
***caractérisé en ce que***
les zones (32, 32*) de flanc s'élèvent en continu du premier niveau (N1) au second niveau (N2) et ***en ce que,*** en particulier, une courbe enveloppe (H1, H2) reliant les points de crête (S1, S2, ...) des crêtes (41) de vague et/ou le minima (M1, M2, ...) des creux (42) de vague présente(nt) la forme d'un arc ou d'une ellipse.

6. Joint plat métallique selon l'une quelconque des revendications 1 à 5,
***caractérisé en ce que***
la différence (Δh1, Δh2, ...) entre les hauteurs (h1, h2, ...) auxquelles les points de crête (S1, S2, ...) de deux crêtes (41) de vague adjacentes font saillie au-delà du premier niveau (N1) diminue dans la direction du point (31) de crête de la protubérance.

7. Joint plat métallique selon l'une quelconque des revendications 1 à 6,
***caractérisé en ce que***
la section transversale des crêtes (41) de vague et des creux (42) de vague de la protubérance (3) en direction de sa largeur est sinusoïdale ou bien possède un profil trapézoïdal en section transversale.

8. Joint plat métallique selon l'une quelconque des revendications 1 à 7,
***caractérisé en ce que***
la structure ondulée (4) s'étend sur la largeur totale (B) de la protubérance (3) et/ou sa longueur totale (L).

9. Joint plat métallique selon l'une quelconque des revendications 1 à 7,
***caractérisé en ce que***
la structure ondulée (4) ne s'étend pas sur la largeur totale (B) de la protubérance (3) et la protubérance (3) comprend en particulier un plateau (34) entre les zones (32, 32*) de flanc avec la structure ondulée (4).

10. joint plat métallique selon l'une quelconque des revendications 1 à 9,
***caractérisé en ce que***
la protubérance (3) présente un profil d'ensemble en forme d'arc ou trapézoïdal en section transversale.

11. Joint plat métallique selon l'une quelconque des revendications 1 à 10,
***caractérisé en ce que***
la structure ondulée (4) dans la protubérance (3) est configurée d'une manière telle qu'une ligne centrale (ML), dont la section transversale dans le sens de la largeur s'étend sur la protubérance (3) à la moitié de l'épaisseur (d/2) du matériau et n'intersecte aucune des lignes suivantes dans la même section transversale :
- une première ligne de liaison (V1), qui est composée de sections linéaires droites respectives (V11, V12, ...) qui relient le minima (M11, M12, ...) de creux (42) de vagues adjacentes du côté de la première surface (21) de la couche (2) de joint les uns avec les autres, et
- une seconde ligne de liaison (V2), qui est composée de sections linéaires droites respectives (V21, V22, ...) qui relient le minima (M21, M22, ...) de creux (42) de vagues adjacentes du côté de la seconde surface (22) de la couche (2) de joint les uns avec les autres.

12. Joint plat métallique selon l'une quelconque des revendications 3 à 11,
***caractérisé en ce que***
la protubérance (3) est le seul élément d'étanchéité entourant l'ouverture de passage (5, 105).

13. Joint plat métallique selon l'une quelconque des revendications 3 à 11,
***caractérisé en ce que***
outre la protubérance (3), un autre élément d'étanchéité, en particulier adoptant la forme d'un bourrelet entourant l'ouverture de passage (5, 105), est prévu pour l'étanchéité de l'ouverture de passage (5, 105).

14. Joint plat métallique selon l'une quelconque des revendications 1 à 13,
***caractérisé en ce que***
il comprend au moins deux couches (2, 2') de joint dont une au moins comprend une protubérance (3) avec une structure ondulée (4).

15. Joint plat métallique selon la revendication 14,
***caractérisé en ce que***
dans la couche (2') de joint supplémentaire, l'un des éléments suivants est situé opposé à la protubérance (3) avec la structure ondulée (4) :
- une protubérance (3') avec une structure ondulée (4'), en particulier une protubérance (3') disposée dans une symétrie en miroir par rapport à la protubérance (3) dans la première couche (2) de joint ;
- un bourrelet (6') ou un demi-bourrelet, en particulier un bourrelet (6') ou un demi-bourrelet disposé essentiellement dans une symétrie en miroir par rapport à la protubérance (3) dans la première couche de joint ;
- une section plate (7') de la couche supplémentaire (2') de joint.

16. Joint plat métallique selon l'une quelconque des revendications 1 à 15,
***caractérisé en ce que***
le joint plat est un joint de culasse, un joint haute pression ou un joint de guidage de gaz d'échappement, en particulier un joint pour collecteur d'échappement ou un joint dans la zone de pré-traitement ou de post-traitement du gaz d'échappement.

17. Utilisation d'un joint métallique selon l'une quelconque des revendications précédentes, pour l'étanchéité entre un joint de culasse (ZK) et un bloc-moteur (MB) avec des chemises de cylindre (LB),
***caractérisée en ce que***
la protubérance (3) comble l'espace libre (S) entre le bloc-moteur (MB) et les chemises de cylindre (LB).
